# EUROPEAN PATENT APPLICATION

(11) **EP 4 746 114 A1**
(43) Date of publication of application: **20.05.2026**
(21) Application number: 24770058.6
(22) Date of filing: 14.05.2024
(51) Int. Cl.: H01M 10/44

(54) **BATTERY SYSTEM, CHARGING CONTROL DEVICE, AND BATTERY PACK CHARGING METHOD**

(30) Priority: 13.10.2023 WO PCT/CN2023/124545
(71) Applicant: Contemporary Amperex Technology (Hong Kong) Limited, Central (HK)
(72) Inventor: JI, Cheng, Ningde, Fujian 352100 (CN); LI, Baiqing, Ningde, Fujian 352100 (CN)
(74) Representative: Lorenz Seidler Gossel Part. mbB
(86) International application number: PCT/CN2024/093197
(87) International publication number: WO 2024/188371

(57) **Abstract**

Disclosed in the present application are a battery system, a charging control device, and a battery pack charging method. The battery system comprises: a battery pack comprising at least one battery cell, and a temperature sensor, a battery management system and a heating apparatus, wherein a positive-electrode active material of the battery cell comprises a lithium-containing transition metal phosphate, the lithium-containing transition metal phosphate at least comprising a manganese element; the temperature sensor is used for acquiring the temperature of the battery cell; and the battery management system is used for acquiring a first state parameter of the battery cell before and/or during a charging process of the battery cell, the first state parameter of the battery cell being used for generating a control instruction for the heating apparatus, and the control instruction being used for controlling the heating apparatus to heat the battery cell.

## Description

### CROSS-REFERENCE TO RELATED APPLICATION

The present disclosure is presented based on Chinese Patent Application No. PCT/CN2023/081452 filed on March 14, 2023 and entitled "CHARGING METHOD, APPARATUS, BATTERY PACK, ELECTRONIC DEVICE, AND COMPUTER-READABLE STORAGE MEDIUM", and Chinese Patent Application No. PCT/CN2023/124545 filed on October 13, 2023 and entitled "BATTERY, CHARGING APPARATUS, CHARGING METHOD, BATTERY MANAGEMENT SYSTEM, AND ELECTRICAL DEVICE", and claims the priority of the above two Chinese patent applications, the contents of which are hereby incorporated herein by reference in their entireties.

### TECHNICAL FIELD

The present application relates to the field of battery technology, and in particular, to a battery system, a charging control device, and a charging method for a battery pack.

### BACKGROUND

At present, with the development of the times, electric vehicles have huge market prospects due to their high environmental friendliness, low noise, low cost and other advantages, and can effectively promote energy conservation and emission reduction, contributing to the development and progress of society. For electric vehicles, battery technology is a crucial factor in their development. Therefore, improving the charging performance of the battery has become an urgent issue that needs to be addressed.

### SUMMARY

In view of this, embodiments of the present application at least provide a battery system, a charging control device, and a charging method for a battery pack.

The technical solutions of the embodiments of the present application are implemented as follows:

In a first aspect, the embodiments of the present application provide a battery system, which includes: a battery pack including at least one battery cell, a temperature sensor, a battery management system, and a heating apparatus. The battery cell includes a positive electrode plate; the positive electrode plate includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes a manganese element; the temperature sensor is configured to obtain a temperature of the battery cell; the battery management system is configured to acquire a first state parameter of the battery cell before and/or during charging of the battery cell, where the first state parameter of the battery cell is configured to generate a control instruction for the heating apparatus; the control instruction is configured to control the heating apparatus to heat the battery cell.

In the embodiments of the present application, a control instruction for a heating apparatus is generated through a first state parameter and a second state parameter of a battery cell acquired before and/or during charging of the battery cell; the heating apparatus is then controlled through the control instruction, so as to enable a temperature in a first time period during the charging of the battery cell to be within a temperature range. In this way, by controlling the heating apparatus, a temperature of a charging plateau corresponding to the manganese element is within the temperature range during the charging of the battery cell, thereby reducing the polarization of the positive electrode active material itself, increasing the delithiation depth of the positive electrode active material of the battery, and thus increasing the capacity of the battery. Meanwhile, the temperature of the battery cell within the temperature range helps to increase the diffusion speed and the delithiation speed of lithium ions, thereby shortening the charging time of the battery cell, making it easier to meet the requirements of fast charging, and thus improving the charging experience of the user.

In some embodiments, the battery management system is further configured to: acquire a second state parameter of the battery cell before and/or during the charging of the battery cell; determine the control instruction based on the first state parameter of the battery cell; send the control instruction to the heating apparatus, so as to enable a temperature in a first time period during the charging of the battery cell to be within a temperature range, where the first time period is a time period during which the second state parameter of the battery cell meets a condition.

In the embodiments of the present application, a battery management system located in the battery system may determine a control instruction based on the first state parameter; and control the heating apparatus based on the control instruction. In this way, the efficiency of controlling the temperature of the battery cell may be improved through information interaction between the battery management system and the heating apparatus, both of which are located in the battery system. Moreover, by detecting the first state parameter of the battery and determining the control instruction for controlling the temperature of the battery, not only can the temperature of the battery be effectively regulated, but also the impact on the charging of the battery can be reduced, thereby reducing unnecessary power consumption.

In some embodiments, the first time period is a time period during which the battery cell enters the charging plateau corresponding to the manganese element; the battery management system is configured to acquire the first state parameter of the battery cell before the battery cell enters the first time period and during the first time period; the control instruction is configured to control the heating apparatus, so as to enable the temperature of the battery cell in the first time period to be within the temperature range.

In the embodiments of the present application, the battery management system may not only acquire the first state parameter of the battery cell before the battery cell enters the first time period, but also acquire the first state parameter of the battery cell during the first time period. In this way, different heating modes may be adopted when acquiring the first state parameter in different time periods, thereby improving the flexibility of controlling the temperature of the battery cell.

In some embodiments, the charging of the battery cell further includes a second time period; the second time period is a time period during which the battery cell enters a charging plateau corresponding to an iron element; the battery management system is configured to acquire the first state parameter of the battery cell during the first time period and the second time period; the control instruction is configured to control the heating apparatus, so as to enable the temperature of the battery cell before entering the first time period and during the first time period to be within the temperature range.

In the embodiments of the present application, the battery management system may also acquire the first state parameter of the battery cell in advance when the battery cell enters the charging plateau corresponding to the iron element, such that a heating mode with a relatively low heating rate may be adopted. In this way, based on the condition that the temperature of the battery cell when the battery cell enters the charging plateau corresponding to the manganese element is within the temperature range, the power consumption can be reduced, thereby saving energy consumption.

In some embodiments, the first state parameter of the battery cell includes a temperature of the battery cell, and the battery management system is further configured to acquire, based on the temperature sensor, the temperature of the battery cell before or during the charging of the battery cell; the turning on indication information is generated in the case that the temperature of the battery cell is less than or equal to a first temperature threshold, where the first temperature threshold is less than or equal to an upper limit temperature of the temperature range; the turning off indication information is generated in the case that the temperature of the battery cell is greater than or equal to a second temperature threshold, where the second temperature threshold is greater than or equal to the first temperature threshold, and the first temperature threshold is greater than or equal to a lower limit temperature of the temperature range; the first keeping information is generated in the case that the temperature of the battery cell is within the temperature range and the heating apparatus is in a turn-on state; the second keeping information is generated in the case that the temperature of the battery cell is within the temperature range and the heating apparatus is in a turn-off state.

In the embodiments of the present application, when the battery cell is at different temperatures, a control instruction corresponding to the temperature of the battery cell may be generated, such that the temperature in the first time period during the charging of the battery cell may be accurately within the temperature range.

In some embodiments, the first state parameter of the battery cell includes one of the following: a state of charge of the battery cell, a charging duration of the battery cell, a voltage of the battery cell, and a current of the battery cell; the battery management system is further configured to acquire the first state parameter of the battery cell during the charging of the battery cell, where the turning on indication information is generated in the case that the first state parameter of the battery cell is less than or equal to a first threshold; and the turning off indication information is generated in the case that the first state parameter of the battery cell is greater than or equal to a second threshold.

In the case that the turning on indication information and the turning off indication information are directed to the same heating apparatus, the first threshold is less than the second threshold; in the case that the turning on indication information and the turning off indication information are not directed to the same heating apparatus, the first threshold may be less than or equal to the second threshold, or the first threshold may be greater than the second threshold.

A value of the first threshold is related to at least one of the following factors: a heating rate of the heating apparatus, a temperature of the battery cell, and a state parameter value of the battery cell when the battery cell is in the first time period.

In the embodiments of the present application, because the first state parameter of the battery cell includes the state parameter of the battery cell when the battery cell is in the first time period, in the case that the first state parameter of the battery cell is less than or equal to the first threshold, it may be determined that the battery cell does not enter the first time period. At this time, the heating apparatus may be turned on in advance, such that when the battery cell enters the first time period, the temperature of the battery cell may be within the temperature range.

In some embodiments, the first state parameter of the battery cell includes a state of charge of the battery cell, and the battery management system is further configured to acquire the state of charge of the battery cell during the charging of the battery cell; the turning on indication information is generated in the case that the SOC of the battery cell is less than or equal to a first SOC threshold; the turning off indication information is generated in the case that the SOC of the battery cell is greater than or equal to a second SOC threshold, where the second SOC threshold is greater than the first SOC threshold; the first SOC threshold is determined based on a molar proportion of the iron element and/or a molar proportion of the manganese element in the iron and manganese elements of the positive electrode active material.

In the embodiments of the present application, because the first SOC threshold is determined based on a molar proportion of the iron element and/or a molar ratio of the manganese element in the iron and manganese elements of the positive electrode active material, whether the battery cell enters the charging plateau corresponding to the manganese element during the charging may be accurately determined through the first SOC threshold, such that when the battery cell does not enter the charging plateau corresponding to the manganese element, the heating apparatus is turned on in advance, and when the battery cell enters the charging plateau corresponding to the manganese element, the temperature of the battery cell may be within the temperature range.

In some embodiments, the first SOC threshold is related to an SOC of the battery in a fully charged state and the molar proportion of the iron element or the manganese element.

In the embodiments of the present application, the first SOC threshold described above can be determined according to the molar proportion of the iron element or the manganese element in the iron and manganese elements of the positive electrode active material, such that the temperature of the battery is controlled when the battery reaches the charging plateau corresponding to the Mn element, so as to effectively improve the charging performance of the battery and reduce unnecessary power consumption.

In some embodiments, the first state parameter of the battery cell further includes a temperature of the battery cell; the turning on indication information is generated in the case that the temperature of the battery cell is less than or equal to a first temperature threshold and the SOC of the battery cell is less than or equal to the first SOC threshold, where the first temperature threshold is less than or equal to an upper limit temperature of the temperature range; the turning off indication information is generated in the case that the temperature of the battery cell is greater than or equal to a second temperature threshold and/or the SOC of the battery cell is greater than or equal to the second SOC threshold, where the second temperature threshold is greater than or equal to the first temperature threshold, and the first temperature threshold is greater than or equal to a lower limit temperature of the temperature range.

In the embodiments of the present application, the heating apparatus may be turned on when the battery cell does not enter the first time period and the temperature of the battery cell is relatively low, and the heating apparatus may be turned off when the battery cell enters the first time period and/or the temperature of the battery cell is relatively high. In this way, the timing for controlling the heating apparatus may be accurately determined based on the temperature of the battery cell and the SOC of the battery cell.

In some embodiments, the temperature range includes 30 °C to 60 °C.

In the embodiments of the present application, if the temperature of the battery cell is too low, the charging capacity of the battery cell cannot be effectively improved, and if the temperature of the battery cell is too high, other damages may be caused to the battery cell. Therefore, in this implementation, the temperature of the battery cell is controlled between 30 °C and 60 °C, which can increase the charging capacity of the battery without causing additional damage to the battery.

In some embodiments, the battery management system is configured to acquire the first state parameter of the battery cell before the charging; determine, based on the first state parameter of the battery cell, a control instruction for a heating apparatus, and send the control instruction to the heating apparatus; the battery management system is further configured to control, in the case that the temperature of the battery cell is within the temperature range, the battery cell to enter the charging.

In the embodiments of the present application, the battery management system may send the control instruction to the heating apparatus before the charging of the battery, so as to control the temperature of the battery cell through the heating apparatus, thereby minimizing the impact of the heating on the charging.

In some embodiments, the heating apparatus is electrically connected to the battery cell, the control instruction includes turning on indication information, and the heating apparatus is configured to provide, in response to the turning on indication information, a pulse current to the battery cell, so as to enable the battery cell generates heat during passage of the pulse current through the battery cell.

In the embodiments of the present application, the battery may be heated by means of pulse heating, where the heating apparatus is electrically connected to the battery cell, and the heating apparatus provides, in response to the turning on indication information of the battery management system, a pulse current to the battery. During the passage of the pulse current through the battery, the battery can generate heat due to its own internal resistance, thereby realizing self-heating of the battery. This heating mode does not require the arrangement of additional hardware heating structures, which can reduce the structural complexity of the battery.

In some embodiments, the heating apparatus includes a charging apparatus for charging the battery; the charging apparatus is configured to charge, in response to the turning on indication information, the battery based on the pulse current.

In the embodiments of the present application, the battery is charged based on the pulse current by a charging apparatus other than the battery cell, thereby achieving pulse heating of the battery cell. In this way, the power of the battery cell does not need to be consumed during the heating.

In some embodiments, the heating apparatus includes a motor in an electrical device where the battery pack is located, and the motor includes a winding and a control circuit connected between the winding and the battery; the battery management system is further configured to send the control instruction to a controller in the electrical device; the controller in the electrical device is configured to control, in response to the turning on indication information in the control instruction, the control circuit, so as to enable the motor to charge the battery cell based on the pulse current.

In the embodiments of the present application, the heat generated by the working loss of the motor in the electrical device may be used to heat the battery cell without consuming additional electrical energy.

In some embodiments, the heating apparatus includes a heating circuit, and the heating circuit includes an energy storage element and a switch module; the switch module is configured to form, in response to the turning on indication information in the control instruction, a loop for the energy storage element to charge the battery cell and a loop for the battery to discharge the energy storage element, so as to enable the energy storage element to charge the battery cell based on the pulse current.

In the embodiments of the present application, an additional heating circuit is used to heat the battery cell. In the case that the electrical device, e.g., a vehicle, has not yet been connected to the charging apparatus, or the motor of the electrical device is working, the vehicle can be heated in advance, which greatly saves the time of the user.

In some embodiments, the heating apparatus is disposed on the exterior of the housing of the battery pack; the heating apparatus is configured to generate, in response to the turning on indication information in the control instruction, heat, so as to perform heat transfer on the battery cell through the battery housing, thereby realizing heating of the battery cell.

In the embodiments of the present application, the battery cell may also be heated by means of external heating. A heating apparatus is disposed on the exterior of the housing of the battery pack. The heating apparatus generates heat in response to the turning on indication information of the battery management system, and heats the battery cell through heat transfer between the heating apparatus and the battery cell. This heating mode may be performed during the charging of the battery, that is, the battery cell can be heated simultaneously during the charging of the battery cell, and the charging of the battery cell will not be affected.

In some embodiments, the battery management system is further configured to determine, based on the temperature of the battery cell, a target heating mode for heating the battery cell from at least two heating modes; or determine, based on a temperature rise rate of the battery cell and the temperature of the battery cell under different heating modes, a target heating mode for heating the battery cell from at least two heating modes; the battery management system is further configured to, based on the target heating mode, send the control instruction to a corresponding heating apparatus; where the at least two heating modes include a first heating mode for heating the battery cell based on a pulse current, and a second heating mode for heating the battery cell by means of heat transfer.

In the embodiments of the present application, since different heating modes correspond to different temperature ranges with optimal heating efficiency, a suitable heating mode may be selected according to the temperature of the battery cell, so as to improve the heating efficiency.

In some embodiments, the battery management system is configured to: determine a temperature difference between the temperature of the battery cell and the lower limit of the temperature range; determine the target heating mode to be the first heating mode in the case that the temperature difference is greater than a third temperature threshold; determine the target heating mode to be the second heating mode in the case that the temperature difference is less than or equal to the third temperature threshold.

In the embodiments of the present application, when the temperature of the battery cell is relatively low, the battery cell may be heated by the first heating mode with a relatively high heating rate; when the temperature of the battery cell is relatively high, the battery cell may be heated by the second heating mode with a relatively low heating rate. In this way, the heating efficiency may be improved by selecting a suitable heating mode according to the temperature of the battery cell.

In some embodiments, the battery management system is configured to: determine a temperature difference between the temperature of the battery cell and the lower limit of the temperature range, and a duration for the battery cell to enter the first time period; based on a magnitude relationship between the temperature difference and the third temperature threshold, and a magnitude relationship between the duration for the battery cell to enter the first time period and a second duration threshold, determine a target heating mode for heating the battery cell from at least two heating modes; where in the case that the temperature difference is greater than the third temperature threshold, and the duration for the battery cell to enter the first time period is greater than the second duration threshold, the target heating mode is a corresponding heating mode with a high temperature rise rate between the first heating mode and the second heating mode; in the case that the temperature difference is less than or equal to the third temperature threshold, and or the required duration is less than or equal to the second duration threshold, the target heating mode is a corresponding heating mode with a relatively low temperature rise rate between the first heating mode and the second heating mode.

In the embodiments of the present application, if the temperature of the battery cell is relatively low and the duration for the battery cell to enter the first time period is relatively long, a heating mode with a relatively high heating rate is required to be adopted; if the temperature of the battery cell is relatively high and the duration for the battery cell to enter the first time period is relatively short, a heating mode with a relatively low heating rate may be adopted. In this way, the heating efficiency may be improved by selecting a suitable heating mode according to the temperature of the battery cell and the duration for the battery cell to enter the first time period.

In some embodiments, the battery management system is further configured to: send a charging parameter to a charging apparatus, where the charging parameter includes information of a constant current and a constant voltage, so as to enable the charging apparatus to charge the battery based on the constant current, and in the case that the battery cell is charged to a voltage greater than or equal to a voltage threshold based on the constant current, charge the battery based on the constant voltage until the battery reaches a fully charged state, where the constant voltage is a voltage of the battery cell when the battery cell enters the first time period.

In the embodiments of the present application, the battery may be charged by adopting a charging mode of first constant-current charging and then constant-voltage charging, which further improves the charging capacity of the battery while increasing the charging rate.

In a second aspect, the embodiments of the present application provide a charging control device, which is configured to control a heating apparatus to heat a battery cell; a battery system includes a battery pack, a temperature sensor, a battery management system, and the heating apparatus; the battery pack includes at least one battery cell, where the temperature sensor is configured to obtain a temperature of the battery cell; a positive electrode plate of the battery cell includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes a manganese element; the charging control device includes: a controller, configured to acquire a first state parameter of the battery cell from the battery management system before and/or during charging of the battery cell; generate, based on the first state parameter of the battery cell, a control instruction for the heating apparatus, where the control instruction is configured to control the heating apparatus to heat the battery cell.

In a third aspect, the embodiments of the present application provide a charging method for a battery pack, which is applied to a battery management system. The battery system includes: a battery pack, a temperature sensor, a heating apparatus, and the battery management system. The battery pack includes at least one battery cell. The temperature sensor is configured to obtain a temperature of the battery cell; a positive electrode plate of the battery cell includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes at least a manganese element. The method includes: acquiring a first state parameter of the battery cell before and/or during charging of the battery cell; generating a control instruction for the heating apparatus based on the first state parameter; sending the control instruction to the heating apparatus, where the control instruction is configured to control the heating apparatus to heat the battery cell.

In a fourth aspect, the embodiments of the present application provide a charging method for a battery pack. The battery pack includes at least one battery cell; the battery pack is located in a battery system; the battery system further includes a temperature sensor and a battery management system. The temperature sensor is configured to obtain a temperature of the battery cell; a positive electrode plate of the battery cell includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes at least a manganese element. The charging method for the battery pack is applied to a charging control device. The method includes: acquiring a first state parameter of the battery cell from the battery management system before and/or during charging of the battery cell; generating a control instruction for a heating apparatus based on the first state parameter of the battery cell, where the control instruction is configured to control the heating apparatus to heat the battery cell.

It should be understood that both the foregoing general description and the following detailed description are exemplary and explanatory only and are not construed as limiting the technical solutions of the present application.

### BRIEF DESCRIPTION OF THE DRAWINGS

The accompanying drawings here are incorporated into the specification and constitute a part of the specification. These accompanying drawings illustrate embodiments consistent with the present application and are used in conjunction with the specification to illustrate the technical solutions of the present application.
FIG. 1 is a schematic diagram of the composition of a battery system provided according to the embodiments of the present application;
FIG. 2 is a schematic diagram of a charging curve of a battery cell provided according to the embodiments of the present application;
FIG. 3 is a schematic diagram of a curve showing the relationship between the charging capacity and the temperature of a battery according to the embodiments of the present application;
FIG. 4 is a schematic diagram of a curve showing the relationship between the discharging capacity and the temperature of a battery according to the embodiments of the present application;
FIG. 5 is a first schematic diagram of a heating apparatus provided according to the embodiments of the present application;
FIG. 6 is a second schematic diagram of a heating apparatus provided according to the embodiments of the present application;
FIG. 7 is a first schematic diagram of a charging control device provided according to the embodiments of the present application;
FIG. 8 is a second schematic diagram of a charging control device provided according to the embodiments of the present application;
FIG. 9 is a first schematic diagram of an implementation process of a charging method for a battery pack provided according to the embodiments of the present application;
FIG. 10 is a second schematic diagram of an implementation process of a charging method for a battery pack provided according to the embodiments of the present application;
FIG. 11 is a third schematic diagram of an implementation process of a charging method for a battery pack provided according to the embodiments of the present application;
FIG. 12 is a fourth schematic diagram of an implementation process of a charging method for a battery pack provided according to the embodiments of the present application;
FIG. 13 is a fifth schematic diagram of an implementation process of a charging method for a battery pack provided according to the embodiments of the present application;
FIG. 14 is a sixth schematic diagram of an implementation process of a charging method for a battery pack provided according to the embodiments of the present application.

### DETAILED DESCRIPTION

In order to make the objectives, technical solutions, and advantages of the present application clearer, the technical solutions of the present application will be further explained in detail below in conjunction with the drawings and embodiments. The described embodiments should not be regarded as limiting the present application. All other embodiments obtained by those of ordinary skill in the art without creative work shall fall within the protection scope of the present application.

In the following description, reference is made to "some embodiments", which describe a subset of all possible embodiments, but it can be understood that "some embodiments" may be the same subset or different subsets of all possible embodiments and may be combined with each other without conflict.

The terms "first/second/third" involved are only used to distinguish similar objects and do not represent a specific ordering of the objects. It can be understood that "first/second/third" can be interchanged with a specific order or sequence where permitted such that the embodiments of the present application described herein can be implemented in an order other than that illustrated or described herein.

Unless defined otherwise, all technical and scientific terms used herein have the same meaning as commonly understood by those skilled in the art to which the present application belongs. The terms used herein are for the purpose of describing the present application only and are not intended to be limiting of the present application.

At present, new energy batteries are being applied more and more widely in life and industry. New energy batteries are not only applied in energy storage power systems such as hydropower, thermal power, wind power and solar power stations, but are also widely applied in electric transportation vehicles such as electric bicycles, electric motorcycles, electric vehicles, as well as in aerospace and other fields. As the application areas of power batteries continue to expand, the market demand is also increasing.

In the embodiments of the present disclosure, the battery may be a battery cell. The battery cell refers to a basic unit that can realize the mutual conversion between chemical energy and electrical energy. It can be used for making battery modules or battery packs to supply power to electrical apparatuses. The battery cell may be a secondary battery, which refers to a battery cell that can continue to be used by activating the active material by charging after the battery cell is discharged. Among battery cells, the lithium manganese iron phosphate battery has a higher voltage plateau than the lithium iron phosphate battery, may have an energy density of about 15% higher than that of the lithium iron phosphate battery, and possesses the safety features and low-cost advantages of the lithium iron phosphate battery, making the lithium manganese iron phosphate battery widely used in the market.

However, although the lithium manganese iron phosphate battery has the advantage of high energy density, the delithiation speed of the positive electrode active material on the positive electrode plate of the lithium manganese iron phosphate battery is slow, resulting in a relatively low charging rate, which brings inconvenience to the user. In addition, the delithiation depth of lithium manganese iron phosphate, the positive electrode active material in the lithium manganese iron phosphate battery, is low, such that the capacity of the lithium manganese iron phosphate battery cannot be fully utilized.

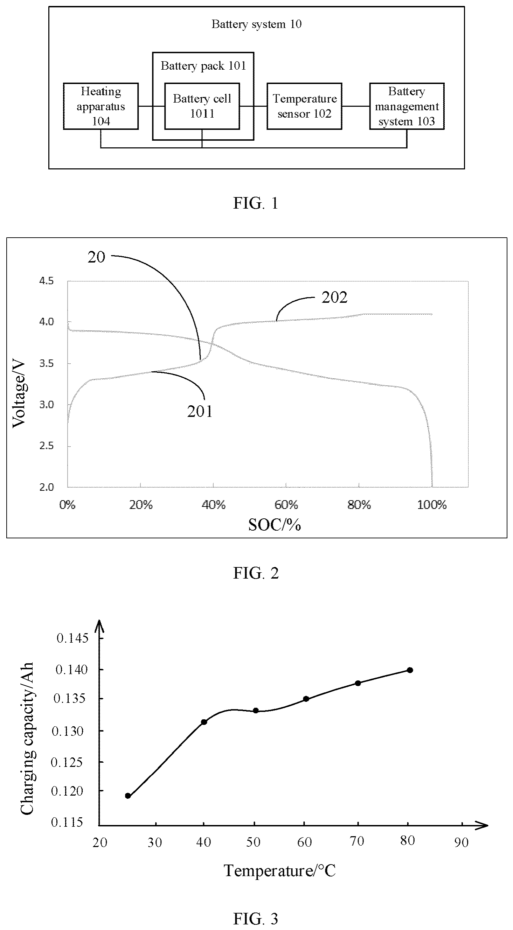

In order to solve the technical problems that the charging rate of the lithium manganese iron phosphate battery is relatively low and the capacity of the lithium manganese iron phosphate battery cannot be fully utilized, the embodiments of the present application provide a battery system 10. As shown in FIG. 1, the battery system 10 includes a battery pack 101, a temperature sensor 102, a battery management system 103, and a heating apparatus 104. The battery pack 101 includes at least one battery cell 1011.

The battery cell 1011 includes a positive electrode plate, a negative electrode plate, a separation film disposed between the positive electrode plate and the negative electrode plate, and an electrolyte including a lithium salt. The positive electrode plate includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes at least a manganese element.

The temperature sensor 102 is configured to obtain a temperature of the battery cell.

The battery management system 103 is configured to acquire a first state parameter of the battery cell 1011 before and/or during charging of the battery cell 1011.

The first state parameter of the battery cell 1011 is configured to generate a control instruction for a heating apparatus;
The control instruction is configured to control the heating apparatus to heat the battery cell.

In some embodiments, the battery management system 103 is configured to acquire a second state parameter of the battery cell 1011 before and/or during charging of the battery cell 1011. The control instruction is configured to control the heating apparatus, so as to enable a temperature in a first time period during the charging of the battery cell 1011 is within a temperature range. Here, the temperature range may be preset; the first time period is a time period during which the second state parameter of the battery cell meets a condition.

In the implementation process, at a certain time t1, the first state parameter and the second state parameter may be the same instantaneous value of the battery cell. For example, the instantaneous value may be a voltage value of 1 (3.6 V), an SOC value of the battery cell (35%), or the like. Since the value of the second state parameter cannot be a temperature value, when the first state parameter only includes the temperature, at a certain time, the second state parameter and the first state parameter are not the same instantaneous value.

In the embodiments of the present application, the electrolyte may be liquid, gel or all solid. In some embodiments, the lithium salt includes at least one of lithium hexafluorophosphate, lithium tetrafluoroborate, lithium perchlorate, lithium hexafluoroarsenate, lithium bis(fluorosulfonyl)imide, lithium bis((trifluoromethyl)sulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In the embodiments of the present application, the positive electrode current collector may be a metal foil or a composite current collector. For example, an aluminum foil can be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on a polymer material substrate (such as polypropylene (PP), polyethylene terephthalate (PET), polybutylene terephthalate (PBT), polystyrene (PS), and polyethylene (PE)).

In some embodiments, the positive electrode active material layer described above may further include a binder. As an example, the binder may include at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode active material layer may further include a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate may be prepared in the following manner: dispersing the components described above for preparing the positive electrode active material layer, such as the lithium-containing transition metal phosphate, the conductive agent, the binder and any other components in a solvent (e.g., N-methylpyrrolidone) to form a positive electrode slurry; coating the positive electrode current collector with the positive electrode slurry, and performing drying, cold pressing and other processes, such that the positive electrode plate can be obtained.

Here, the temperature sensor is a sensor that can sense a temperature and convert the temperature into an output signal. In some embodiments, the temperature sensor may directly collect the temperature of the battery cell. Illustratively, the temperature sensor may be a thermal resistor sensor or a thermocouple sensor. In this way, the temperature of the battery cell may be detected in real time through the temperature sensor in the battery pack. In other embodiments, the temperature sensor may also collect the temperature of other components in direct contact with the battery pack, and use the temperature of other components in direct contact with the battery pack as the temperature of the battery cell.

In some embodiments, in the case that the battery pack is applied to an electric vehicle, the number of battery cells in the battery pack is greater than or equal to 20, and the temperature sensor can collect the temperature of each of the battery cells. Illustratively, the number of battery cells may be 96 or 100.

In the embodiments of the present application, the battery management system (BMS) is configured to acquire a first state parameter and a second state parameter of the battery cell in real time before and/or during charing of the battery cell by a charging apparatus.

"Before charging of the battery cell by a charging apparatus" refers to a preset time range before the charging apparatus charges the battery cell; "during charging of the battery cell by a charging apparatus" refers to a process between the electric energy of the charging apparatus entering the battery cell and the battery cell being fully charged.

Here, the first state parameter and the second state parameter are configured to characterize the real-time state of the battery cell. Illustratively, the first state parameter includes at least one of the following: a temperature of the battery cell, a state of charge of the battery cell, a charging duration of the battery cell, a voltage of the battery cell, and a current of the battery cell; the second state parameter includes at least one of the following: a state of charge of the battery cell, a charging duration of the battery cell, a voltage of the battery cell, and a current of the battery cell.

In the embodiments of the present application, the first state parameter is configured to generate a control instruction for a heating apparatus. The control instruction is configured to control the heating apparatus, so as to enable a temperature in a first time period during the charging of the battery cell to be within a preset temperature range. The first time period is a time period during which the second state parameter of the battery cell meets a condition.

Here, the heating apparatus may be located inside the battery pack, outside the battery pack, or outside the battery system. The heating apparatus may be controlled to heat the battery cell, maintain the current state of the heating apparatus, or turn off the heating apparatus. The second state parameter of the battery cell meeting a condition may characterize that the battery cell enters a charging plateau corresponding to the manganese element. Illustratively, the control instruction described above includes one or more of the following: first keeping information configured to indicate to keep the heating apparatus turned on; second keeping information configured to indicate to keep the heating apparatus turned off; turning on indication information configured to indicate to turn on the heating apparatus; turning off indication information configured to indicate to turn off the heating apparatus. The charging plateau refers, for example, to a stage during the charging when the electrochemical reaction reaches an equilibrium state. Within the charging plateau, the fluctuation of the battery potential with the state of charge is relatively small, or in other words, the battery potential remains in a relatively stable state within the charging plateau.

In some embodiments, the control instruction includes an operating parameter of the heating apparatus, so as to enable the heating apparatus to heat the battery cell based on the operating parameter in the control instruction.

It can be understood that although the battery cell using lithium-containing transition metal phosphate including at least a manganese element as the positive electrode active material has the advantages of relatively high energy density and relatively large capacity, the capacity of the battery cell cannot be fully utilized due to the relatively low delithiation depth of the lithium-containing transition metal phosphate, and the relatively slow delithiation speed of the lithium-containing transition metal phosphate results in a relatively low charging rate of the battery cell, thereby affecting the charging performance of the battery cell. The main reason for the relatively slow delithiation speed of the lithium-containing transition metal phosphate is that after the battery cell reaches the charging plateau corresponding to the manganese element, it is difficult for lithium ions to deintercalate. Charging the battery in the case that the battery cell is within a preset temperature range can eliminate the polarization of the material itself and increase the delithiation depth of the lithium manganese iron phosphate in the lithium manganese iron phosphate battery, thereby increasing the capacity of the lithium manganese iron phosphate battery; meanwhile, high temperature helps to increase the diffusion speed and the delithiation speed of lithium ions, which is conducive to shortening the charging time of the lithium manganese iron phosphate battery and can meet the requirements of fast charging.

Therefore, by controlling the heating apparatus through the control instruction, the temperature in the first time period during the charging of the battery cell may be within the preset temperature range, that is, the temperature of the charging plateau corresponding to the manganese element during the charging of the battery cell may be within the preset temperature range. This can increase the delithiation depth of lithium manganese iron phosphate in the lithium manganese iron phosphate battery, and increase the diffusion speed and the delithiation speed of lithium ions, thereby increasing the capacity of the lithium manganese iron phosphate battery and shortening the charging time of the lithium manganese iron phosphate battery.

In some embodiments, an execution body that generates the control instruction configured to control the heating apparatus may include one of the following: a battery management system and a controller of a charging control device; an execution body that controls the heating apparatus to heat the battery cell based on the control instruction may include one of the following: a battery management system and a controller of a charging control device. The charging control device may be a control device on an electrical device (e.g., a vehicle) or a control device on a charging apparatus (e.g., a charging pile).

In the embodiments of the present application, a control instruction for a heating apparatus is generated through a first state parameter and a second state parameter of a battery cell acquired before and/or during charging of the battery cell; the heating apparatus is then controlled through the control instruction, so as to enable a temperature in a first time period during the charging of the battery cell to be within a preset temperature range. In this way, by controlling the heating apparatus, a temperature of a charging plateau corresponding to the manganese element during the charging of the battery cell is within the preset temperature range, thereby reducing the polarization of the positive electrode active material itself, increasing the delithiation depth of the positive electrode active material of the battery, and thus increasing the capacity of the battery. Meanwhile, the temperature of the battery cell within the preset temperature range helps to increase the diffusion speed and the delithiation speed of lithium ions, thereby shortening the charging time of the battery cell, making it easier to meet the requirements of fast charging, and thus improving the charging experience of the user.

In some embodiments, the battery management system is further configured to determine a control instruction based on the first state parameter of the battery cell, and send the control instruction to a heating apparatus, so as to enable a temperature in a first time period during the charging of the battery cell to be within a preset temperature range.

In the embodiments of the present application, the execution bodies for generating the control instruction and controlling the heating apparatus are both the battery management system.

In some embodiments, the battery management system is configured to determine a control instruction based on a first state parameter of a battery cell; send the control instruction to a controller of a charging control device; the controller of the charging control device is configured to send the control instruction to a heating apparatus, so as to enable a temperature in a first time period during the charging of the battery cell to be within a preset temperature range.

In the embodiments of the present application, an execution body for generating the control instruction is the battery management system, and an execution body for controlling the heating apparatus is the controller of the charging control device. The charging control device may be a control device on an electrical device (e.g., a vehicle) or a control device on a charging apparatus (e.g., a charging pile).

In some embodiments, the battery management system is configured to send a first state parameter of a battery cell to a controller of a charging control device; the controller of the charging control device is configured to determine a control instruction based on the first state parameter of the battery cell and send the control instruction to the battery management system; the battery management system is configured to control, in response to the control instruction, a heating apparatus, so as to enable a temperature in a first time period during charging of the battery cell to be within a preset temperature range.

In the embodiments of the present application, an execution body for generating the control instruction is the controller of the charging control device, and an execution body for controlling the heating apparatus is the battery management system. The charging control device may be a control device on an electrical device (e.g., a vehicle) or a control device on a charging apparatus (e.g., a charging pile).

In some embodiments, the battery management system is configured to send a first state parameter of a battery cell to a controller of a charging control device; the controller of the charging control device is configured to determine a control instruction based on the first state parameter of the battery cell and send the control instruction to a heating apparatus, so as to enable a temperature in a first time period during charging of the battery cell to be within a preset temperature range.

In the embodiments of the present application, an execution body for generating the control instruction is the battery management system, and an execution body for controlling the heating apparatus is the controller of the charging control device. The charging control device may be a control device on an electrical device (e.g., a vehicle) or a control device on a charging apparatus (e.g., a charging pile).

In some embodiments, the battery management system is configured to identify that the battery cell enters a charging plateau corresponding to a manganese element based on the second state parameter of the battery cell.

Correspondingly, the first time period described above is a time period during which the battery cell enters the charging plateau corresponding to the manganese element. The charging of the battery cell further includes a second time period, which is a time period during which the battery cell enters the charging plateau corresponding to the iron element.

As the second state parameter of the battery cell changes continuously, the battery cell sequentially enters the charging plateau corresponding to the iron element and the charging plateau corresponding to the manganese element. Because during the charging of the battery cell, the state of charge of the battery cell, the charging duration of the battery cell, the voltage of the battery cell, and the current of the battery cell have an overall trend of gradually increasing, state parameter thresholds such as an instantaneous state of charge, an instantaneous charging duration, an instantaneous voltage, and an instantaneous current of the battery cell when the battery cell enters the charging plateau corresponding to the manganese element may be determined in advance. In this way, based on a magnitude relationship between the second state parameter and the corresponding state parameter threshold, it can be determined whether the battery cell enters the charging plateau corresponding to the manganese element, that is, in the case that the second state parameter is less than the state parameter threshold (which may be recorded as a third threshold), it is determined that the battery cell does not enter the charging plateau corresponding to the manganese element; in the case that the second state parameter is greater than or equal to the state parameter threshold describe above (which may be recorded as a third threshold), it is determined that the battery cell enters the charging plateau corresponding to the manganese element. The third threshold is known. In the case that the second state parameter includes SOC, the third threshold is an SOC threshold, which corresponds to the molar ratio of the iron element to the manganese element. In the case that the second state parameter includes a voltage, the third threshold is a voltage threshold, which corresponds to the voltage at the charging plateau corresponding to the Mn element; in the case that the second state parameter includes a charging duration, the third threshold is a charging duration threshold, which corresponds to the time from passing through the charging plateau corresponding to the Fe element to entering the charging plateau corresponding to the Mn element.

In some embodiments, charging the battery cell using a charging mode corresponding to the type of the battery cell may increase the charging rate. Illustratively, in the case that the lithium-containing transition metal phosphate in the battery cell includes a manganese element and an iron element, a charging mode of first constant-current charging and then constant-voltage charging may be adopted, that is, the battery cell is first subjected to constant-current charging based on a preset constant current, and when the voltage of the battery cell is a preset constant voltage, the battery cell is subjected to constant-voltage charging with the preset constant voltage. In the case that a molar ratio of the iron element to the manganese element in the lithium-containing transition metal phosphate is 4:6, the preset constant current is 0.3 c, and the preset constant voltage is 4.1 V.

As shown in FIG. 2, a charging curve 20 is a charging curve of a battery cell including lithium-containing transition metal phosphate, in which a molar ratio of the iron element to the manganese element is 4:6. The abscissa of the charging curve 20 is the state of charge (SOC/%) of the battery cell, and the ordinate is the voltage (Voltage/V) of the battery cell. As can be seen from FIG. 2, the voltage plateau of the charging curve 20 is in a two-step form, that is, when the state of charge of the battery cell is about 40% and the voltage of the battery cell is about 4 V, the battery cell enters a voltage plateau 202 corresponding to the manganese element at a higher voltage from a voltage plateau 201 corresponding to the iron element at a lower voltage. Therefore, 40% may be used as a state parameter threshold corresponding to the state of charge of the battery cell, and 4 V may be used as a state parameter threshold corresponding to the voltage of the battery cell. When the state of charge of the battery cell is greater than or equal to 40%, and/or the voltage of the battery cell is greater than or equal to 4 V, it is determined that the battery cell enters a charging plateau corresponding to the manganese element. In addition, when the state of charge of the battery cell is 40% and the voltage of the battery cell is 4 V, the instantaneous charging duration of the battery cell can be determined as a state parameter threshold corresponding to the charging duration of the battery cell. When the charging duration of the battery cell is greater than or equal to the instantaneous charging duration, it is determined that the battery cell enters a charging plateau corresponding to the manganese element.

In some embodiments, in the case that the lithium-containing transition metal phosphate includes an iron element and a manganese element, the state parameter of the battery cell when the battery cell enters the charging plateau corresponding to the manganese element after passing through the charging plateau corresponding to the iron element is used as a first threshold, and the battery management system is configured to determine that the battery cell does not enter the first time period when the second state parameter of the battery cell is less than the first threshold, and determine that the battery cell enters the first time period when the second state parameter of the battery cell is greater than or equal to the first threshold. The first threshold may be at least one of the state parameter thresholds corresponding to the state of charge of the battery cell, the charging duration of the battery cell, the voltage of the battery cell, and the current of the battery cell.

In the embodiments of the present application, the first threshold may be determined based on a molar proportion of the iron element and/or a molar proportion of the manganese element in the iron and manganese elements of the positive electrode active material. The molar proportion of the iron element in the iron and manganese elements is equal to the ratio of the molar content of the iron element to the total molar content of the iron and manganese elements, and the molar proportion of the manganese element in the iron and manganese elements is equal to the ratio of the molar content of the manganese element to the total molar content of the iron and manganese elements.

Illustratively, when the lithium-containing transition metal phosphate includes the iron element and the manganese element, and the molar ratio of the iron element and the manganese element is 4:6, the molar proportion of the iron element is 0.4, and the molar proportion of the manganese element is 0.6. When the second state parameter is the state of charge of the battery cell, the first threshold may be a state of charge threshold, e.g., 40%. When the molar ratio of the iron element to the manganese element is 3:7, the molar proportion of the iron element is 0.3, and the molar proportion of the manganese element is 0.7. When the second state parameter is the state of charge of the battery cell, the first threshold may be a state of charge threshold, e.g., 30%. In the case that the first threshold is a voltage threshold, a charging duration threshold and a current threshold, the voltage threshold, the charging duration threshold and the current threshold may be the voltage, the charging duration and the current corresponding to the state of charge of the battery cell when the state of charge is at the above state of charge threshold, respectively.

In some embodiments, the molar proportion of the iron element may be greater than zero and less than or equal to 1. In some embodiments, the molar proportion of the iron element may be greater than or equal to 0.01 and less than or equal to 0.6.

In some embodiments, the molar proportion of the iron element in the iron and manganese elements may be less than the molar proportion of the manganese element. For example, the molar proportion of the iron element may be between 0.001 and 0.5, such as 0.001, 0.002, 0.003, 0.004, 0.005, 0.007, 0.008, 0.009, 0.01, 0.02, 0.05, 0.07, 0.1, 0.15, 0.2, 0.25, 0.3, 0.35, 0.4, 0.45, 0.49, or 0.5.

In some embodiments, the molar proportion of the iron element in the iron and manganese elements may also be slightly greater than the molar proportion of the manganese element. For example, the molar proportion of the iron element in the iron and manganese elements may be between 0.5 and 0.6, such as 0.51, 0.52, 0.55, 0.57, 0.58, 0.59, or 0.6.

In some embodiments, the state of charge of the battery cell and the voltage of the battery cell may also be combined to determine whether the battery cell enters the charging plateau corresponding to the manganese element, that is, when the state of charge of the battery cell is greater than or equal to the state of charge threshold, e.g., 40%, and the state of charge of the battery cell is greater than or equal to the voltage threshold, e.g., 4 V, it is determined that the battery cell enters the charging plateau corresponding to the manganese element.

It can be understood that in order to increase the delithiation speed of the battery cell after reaching the charging plateau corresponding to the manganese element, high-temperature charging is required on the charging plateau corresponding to the Mn element. Generally, charging above 30 °C may be considered as high-temperature charging, that is, during the charging, the temperature of the battery cell on the charging plateau corresponding to the Mn element is within a preset temperature range. In order to achieve this purpose, it is necessary to acquire a first state parameter of the battery cell in advance to generate a control instruction for controlling a heating apparatus. The timing for acquiring the first state parameter of the battery cell is related to the heating rate of the heating mode of the heating apparatus, the holding duration of the heating mode, etc.

The temperature difference between the current temperature of the battery cell and the optimal temperature (generally between 40 °C and 45 °C), the heating rate of the heating mode, and the holding duration of the heating mode will affect the moment when the heating apparatus is turned on. In other words, any mode that can keep the temperature of the charging plateau corresponding to the Mn element under a high temperature condition is acceptable. Example 1: Assuming that a certain heating mode has a relatively long holding duration, a high temperature environment can be maintained for a relatively long time in advance. For example, the heating apparatus is turned on for heating before receiving the charging instruction, or before the charging plateau corresponding to the Fe element, or during the charging plateau corresponding to the Fe element; then the heating apparatus is turned off after maintaining for a certain heating duration, that is, it is possible to turn off the heating apparatus before entering the charging plateau of the Mn element, such that it is also acceptable to adopt the high-temperature charging mode for the charging plateau corresponding to the Mn element. Example 2: Assuming that a certain heating mode has a relatively long holding duration, a high temperature environment may be maintained for a relatively long time in advance. Example 3: If a temperature difference is relatively small and the heating mode has a particularly fast heating rate, the heating apparatus may be turned on when the battery cell enters the charging plateau corresponding to the Mn element.

In some embodiments, the heating apparatus described above may heat the battery cell by adopting different heating modes. Illustratively, different heating modes may include at least a first heating mode for heating the battery cell based on a pulse current, and a second heating mode for heating the battery cell by means of heat transfer. In the embodiments of the present application, a plurality of heating apparatus may be provided, and different heating apparatus adopt different heating modes; in other embodiments, only one heating apparatus may be provided, and the heating apparatus has different heating modes. The embodiments of the present application do not limit the number of heating apparatuses.

It can be understood that the first heating mode is pulse heating. The principle of pulse heating is: using the short action time of high-power electric pulses to transfer pulse energy to microscopic particles in the substance to achieve a rapid heat transfer process. Therefore, the heating rate of the first heating mode is greater than that of the second heating mode in which the battery cell is heated by means of heat transfer. That is, when a plurality of heating apparatuses are provided, the heating rate of the heating apparatus using the first heating mode is greater than the heating rate of the heating apparatus using the second heating mode.

Therefore, based on heating modes with different heating rates for the heating apparatus, the first state parameter of the battery cell can be acquired at different timings. Illustratively, before charging the battery cell, a first state parameter is acquired. At this time, the time until the battery cell enters the first time period is relatively long. In order to reduce energy consumption, the heating apparatus can adopt a second heating mode with a relatively low heating rate, which can also enable the temperature of the battery cell in the first time period to be within a preset temperature range. Certainly, the heating apparatus may also adopt the first heating mode with a relatively high heating rate. The first state parameter is acquired in an early stage of charging of the battery cell, and since the battery cell has not yet entered the first time period, the second heating mode with a relatively low heating rate can also be adopted; the first state parameter is acquired during the process of the battery cell entering the first time period, and in order to enable the temperature of the battery cell in the first time period be within a preset temperature range as soon as possible, the heating apparatus can adopt the first heating mode with a relatively high heating rate.

In some embodiments, the battery management system is configured to acquire the first state parameter of the battery cell before the battery cell enters the first time period and during the first time period. Here, "before the battery cell enters the first time period" may be before the charging gun of the charging apparatus is inserted into the charging port of the vehicle; "before the battery cell enters the first time period" may also be when the battery cell starts to charge, but the battery cell enters other time periods other than the first time period, for example, the second time period when the battery cell enters the charging plateau corresponding to the iron element in the case that the lithium-containing transition metal phosphate also includes an iron element.

In the embodiments of the present application, the first state parameter of the battery cell may be acquired before the battery cell enters the first time period and during the first time period, and then the heating apparatus is controlled based on the first state parameter, so as to enable the temperature of the battery cell in the first time period to be within a preset temperature range.

In some embodiments, the lithium-containing transition metal phosphate further includes an iron element; the charging of the battery cell further includes a second time period; the second time period is a time period during which the battery cell enters a charging plateau corresponding to the iron element; the battery management system is configured to acquire the first state parameter of the battery cell during the first time period and the second time period; the control instruction is configured to control the heating apparatus, so as to enable the temperature of the battery cell before entering the first time period and during the first time period to be within the preset temperature range.

In the embodiments of the present application, the first state parameter may be acquired during the second time period before the first time period, so as to enable the temperature of the battery cell before entering the first time period and during the first time period to be within a preset temperature range.

In some embodiments, the control instruction described above includes one or more of the following: first keeping information configured to indicate to keep the heating apparatus turned on; second keeping information configured to indicate to keep the heating apparatus turned off; turning on indication information configured to indicate to turn on the heating apparatus; turning off indication information configured to indicate to turn off the heating apparatus.

In the embodiments of the present application, in the case that the first state parameter of the battery cell includes the temperature of the battery cell, the battery management system is configured to determine whether the temperature of the battery cell is within a temperature range. If the temperature of the battery cell is within the temperature range, it means that the current temperature of the battery cell may also enable the temperature of the charging plateau corresponding to the manganese element during charging of the battery cell to be within a preset temperature range in the case that the heating apparatus does not heat the battery cell (that is, the heating apparatus is kept at the current state). Therefore, the control instruction generated based on the temperature of the battery cell may be configured to indicate to keep the heating apparatus at the current state. That is, when the current state of the heating apparatus is the turn-on state, the control instruction is the first keeping information configured to indicate to keep the heating apparatus turned on; when the current state of the heating apparatus is the turn-off state, the control instruction is the second keeping information configured to indicate to keep the heating apparatus turned on.

Therefore, in the case that the temperature of the battery cell is within the temperature range and the heating apparatus is in a turn-on state, the first keeping information may be generated; in the case that the temperature of the battery cell is within the temperature range and the heating apparatus is in a turn-off state, the second keeping information may be generated.

In some embodiments, if the temperature of the battery cell is less than or equal to the first temperature threshold, it means that the temperature of the battery cell is relatively low. In order to enable the temperature of the charging plateau corresponding to the manganese element to be within the temperature range during the charging of the battery cell, it is necessary to turn on the heating apparatus to heat the battery cell, that is, generate turning on indication information configured to indicate to turn on the heating apparatus. The first temperature threshold is less than or equal to the upper limit temperature of the temperature range, that is, even if the temperature of the battery cell is already within the temperature range, the turning on indication information may still be generated to heat the battery cell.

In some embodiments, if the temperature of the battery cell is greater than or equal to the second temperature threshold, it means that the temperature of the battery cell is relatively high. In order to enable the temperature of the charging plateau corresponding to the manganese element to be within the temperature range during the charging of the battery cell, it is necessary to turn off the heating apparatus to lower the temperature of the battery cell, that is, generate turning off indication information configured to indicate to turn off the heating apparatus. The second temperature threshold is greater than or equal to the upper limit temperature of the temperature range.

In some embodiments, in the case that the first state parameter of the battery cell includes one of the state of charge of the battery cell, the charging duration of the battery cell, the voltage of the battery cell, and the current of the battery cell, the control instruction is generated based on a magnitude relationship between the first state parameter and the first threshold. For example, in the case that the control instruction includes turning on indication information, the turning on indication information is generated in the case that the first state parameter of the battery cell is less than or equal to the first threshold; in the case that the control instruction includes turning off indication information, the turning off indication information is generated in the case that the first state parameter of the battery cell is greater than or equal to the second threshold.

In the case that the turning on indication information and the turning off indication information are directed to the same heating apparatus, the first threshold is less than the second threshold; in the case that the turning on indication information and the turning off indication information are not directed to the same heating apparatus, the first threshold may be less than or equal to the second threshold, or the first threshold may be greater than the second threshold.

A value of the first threshold is related to at least one of the following factors: a heating rate of the heating apparatus, a temperature of the battery cell, and a state parameter value of the battery cell when the battery cell is in the first time period.

Example 1: In the case that the first state parameter of the battery cell is the SOC of the battery cell, the battery management system is further configured to acquire the SOC of the battery cell during the charging of the battery cell, where the turning on indication information is generated in the case that the SOC of the battery cell is less than or equal to a first threshold (i.e., the first SOC threshold); and the turning off indication information is generated in the case that the SOC of the battery cell is greater than or equal to a second threshold (i.e., the second SOC threshold). In the case that the turning on indication information and the turning off indication information are directed to the same heating apparatus, the first SOC threshold is less than the second SOC threshold; a value of the first SOC threshold is related to at least one of the following factors: the heating rate of the heating apparatus, the temperature of the battery cell, and the value of the state parameter of the battery cell during the first time period.

Example 2: In the case that the first state parameter of the battery cell is the voltage of the battery cell, the battery management system is further configured to acquire the voltage of the battery cell during charging of the battery cell, where the turning on indication information is generated in the case that the voltage of the battery cell is less than or equal to a first threshold (i.e., the first voltage threshold); and the turning off indication information is generated in the case that the voltage of the battery cell is greater than or equal to a second threshold (i.e., the second voltage threshold). In the case that the turning on indication information and the turning off indication information are directed to the same heating apparatus, the first voltage threshold is less than the second voltage threshold; a value of the first voltage threshold is related to at least one of the following factors: the heating rate of the heating apparatus, the temperature of the battery cell, and the value of the state parameter of the battery cell during the first time period.

Example 3: In the case that the first state parameter of the battery cell is the charging duration of the battery cell, the battery management system is further configured to acquire the charging duration of the battery cell during the charging of the battery cell; where the turning on indication information is generated in the case that the charging duration of the battery cell is less than or equal to a first threshold (i.e., the first charging duration threshold); and the turning off indication information is generated in the case that the charging duration of the battery cell is greater than or equal to a second threshold (i.e., the second charging duration threshold). In the case that the turning on indication information and the turning off indication information are directed to the same heating apparatus, the first charging duration threshold is less than the second charging duration threshold; a value of the first charging duration threshold is related to at least one of the following factors: the heating rate of the heating apparatus, the temperature of the battery cell, and the value of the state parameter of the battery cell during the first time period.

Here, the first threshold includes the state parameter of the battery cell during the first time period. Therefore, when the first state parameter of the battery cell is less than or equal to the first threshold, it means that the battery cell has not started to charge, or the battery cell has started to charge but the battery cell is in the charging plateau corresponding to the iron element and does not enter the charging plateau corresponding to the manganese element. At this time, turning on indication information configured to indicate to turn on the heating apparatus may be generated to increase the temperature of the battery cell in advance. When the battery cell enters the charging plateau corresponding to the manganese element, the temperature of the battery cell may be within a preset temperature range, thereby increasing the charging speed and improving the battery capacity.

Here, the second threshold may be a state parameter corresponding to the time when the battery cell is close to the end of charging. When the first state parameter of the battery cell is greater than or equal to the second threshold, it means that the charging of the battery cell is completed or about to be completed. At this time, turning off indication information indicating to turn off the heating apparatus may be generated to control the heating apparatus to stop heating the battery cell.

In some embodiments, in the case that the first state parameter of the battery cell includes the state of charge of the battery cell, the battery management system is further configured to acquire the state of charge of the battery cell during the charging of the battery cell. The turning on indication information is generated in the case that the state of charge (SOC) of the battery cell is less than or equal to a first SOC threshold; the turning off indication information is generated in the case that the SOC of the battery cell is greater than or equal to a second SOC threshold; the second SOC threshold is greater than the first SOC threshold;

Here, the first SOC threshold is determined based on the molar proportion of the iron element and/or the molar proportion of the manganese element in the iron and manganese elements of the positive electrode active material. Illustratively, in the case that the transition metals in the lithium-containing transition metal phosphate of the positive electrode active material are an iron element and a manganese element, the molar proportion of the iron element in the iron and manganese elements is equal to the ratio of the molar content of the iron element to the total molar content of the iron element and the manganese element. When the molar proportion of the iron element is 0.3, the molar proportion of the manganese element is 0.7. At this time, the first SOC threshold may be 30%.

In some embodiments, the first SOC threshold is related to an SOC of the battery cell in a fully charged state and the molar proportion of the iron element or the manganese element. Illustratively, the first SOC threshold may be the product of the SOC of the battery cell in a fully charged state and the molar proportion of the iron element or the manganese element. It can be understood that the SOC of the battery in a fully charged state is 1, so the first SOC threshold is the molar proportion of the iron element or the molar proportion of the manganese element.

It can be understood that a battery cell including positive electrode active materials of iron and manganese elements will successively experience a charging plateau corresponding to the iron element and a charging plateau corresponding to the manganese element during the charging. Since the direct current resistance (DCR) of the battery 120 in the charging plateau corresponding to the manganese element is 1.5-2 times the DCR in the charging plateau corresponding to the iron element, it is difficult for lithium ions to deintercalate from the battery cell after reaching the charging plateau corresponding to the manganese element. In the case that the SOC of the battery cell is greater than or equal to the first SOC threshold, the battery cell has passed the charging plateau corresponding to the iron element and enters the charging plateau corresponding to the manganese element. At this time, controlling the temperature of the battery cell can significantly improve the delithiation depth of the charging plateau corresponding to the manganese element, so as to increase the charging capacity of the battery cell and have little impact on the charging of the battery cell, thereby reducing unnecessary power consumption.

Therefore, when the state of charge of a single battery cell is less than or equal to the first SOC threshold, it means that the battery cell does not enter the charging plateau corresponding to the manganese element and is in an uncharged stage or an early stage of charging. At this time, turning on indication information may be generated to control the heating apparatus to heat the battery cell. In this way, the battery cell may be preheated, such that when the battery cell enters the charging plateau corresponding to the manganese element, the temperature of the battery cell is within a preset temperature range.

In the embodiments of the present application, in the case that the SOC of the battery cell is greater than or equal to the second SOC threshold, it means that the charging of the battery cell has been completed or is about to be completed. At this time, turning off indication information indicating to turn off the heating apparatus may be generated to control the heating apparatus to stop heating the battery cell.

In some embodiments, in the case that the first state parameter of the battery cell further includes the temperature of the battery cell and the SOC of the battery cell, the turning on indication information described above is generated in the case that the temperature of the battery cell is less than or equal to the first temperature threshold, and the SOC of the battery cell is less than or equal to the first SOC threshold; the turning off indication information described above is generated in the case that the temperature of the battery cell is greater than or equal to the second temperature threshold, and/or the SOC of the battery cell is greater than or equal to the second SOC threshold. The first temperature threshold is less than or equal to the upper limit temperature of the temperature range, the second temperature threshold is greater than or equal to the first temperature threshold, and the first temperature threshold is greater than or equal to the lower limit temperature of the temperature range.

It can be understood that in the case that the temperature of the battery cell is less than or equal to the first temperature threshold, it means that the temperature of the battery cell is relatively low and the battery cell needs to be heated by a heating apparatus. In the case that the SOC of the battery cell is less than or equal to the first SOC threshold, it means that the battery cell is in the early stage of charging and does not enter the charging plateau of the manganese element. Therefore, in the case that the temperature of the battery cell is relatively low and the battery cell is in the early stage of charging, turning on indication information may be generated to control the heating apparatus to heat the battery cell.

It can be understood that in the case that the temperature of the battery cell is greater than or equal to the second temperature threshold, it means that the temperature of the battery cell is relatively high; in the case that the SOC of the battery cell is greater than or equal to the second SOC threshold, it means that the battery cell is in the late stage of charging. Therefore, when the temperature of the battery cell is relatively high and the battery cell is at the late stage of charging, turning off indication information may be generated to control the heating apparatus to stop heating the battery cell.

In some embodiments, in the case that the first state parameter of the battery cell further includes the charging duration of the battery cell, the battery management system is further configured to acquire the charging duration of the battery cell during the charging of the battery cell; the turning on indication information is generated in the case that the charging duration of the battery cell is less than or equal to a first duration threshold; the value of the first duration threshold is greater than 0 and less than the maximum charging duration of the battery cell; the turning off indication information is generated in the case that the charging duration of the battery cell is greater than or equal to a second duration threshold; the second duration threshold is less than the maximum charging duration of the battery cell.

Here, the first duration threshold may be determined based on a duration corresponding to when the battery cell enters the charging plateau corresponding to the manganese element. Illustratively, the duration corresponding to when the battery cell enters the charging plateau corresponding to the manganese element may be determined as the first duration threshold, or a duration shorter than the duration corresponding to when the battery cell enters the charging plateau corresponding to the manganese element may be determined as the first duration threshold.

In the embodiments of the present application, the battery management system may acquire the charging duration of the battery cell in real time during the charging of the battery cell. When the charging duration is less than or equal to the first duration threshold, it means that the battery is in the early stage of charging. At this time, the battery cell can be heated, that is, the turning on indication information is generated. Correspondingly, when the charging duration is greater than or equal to the second duration threshold, it means that the battery is in the late stage of charging. At this time, the heating of the battery cell can be stopped, that is, the turning off indication information is generated.

Illustratively, the maximum charging duration of the battery cell is 15 minutes, and the duration corresponding to when the battery cell enters the charging plateau corresponding to the manganese element is 5 minutes. As such, the turning on indication information may be generated when the charging duration is less than or equal to 5 minutes.

In some embodiments, in the case that the first state parameter of the battery cell includes the voltage of the battery cell, the battery management system is further configured to acquire the voltage of the battery cell during the charging of the battery cell; the turning on indication information is generated in the case that the voltage of the battery cell is less than or equal to the first voltage threshold; the turning off indication information is generated in the case that the voltage of the battery cell is greater than or equal to the second voltage threshold; the second voltage threshold is greater than the first voltage threshold.

Here, the first voltage threshold may be determined based on a voltage corresponding to when the battery cell enters the charging plateau corresponding to the manganese element. Illustratively, the voltage corresponding to when the battery cell enters the charging plateau corresponding to the manganese element may be determined as the first voltage threshold, or a voltage lower than the voltage corresponding to when the battery cell enters the charging plateau corresponding to the manganese element may be determined as the first voltage threshold.

In the embodiments of the present application, the battery management system may acquire the voltage of the battery cell in real time during the charging of the battery cell. When the voltage is less than or equal to the first voltage threshold, it means that the battery is in the early stage of charging. At this time, the battery cell may be heated, that is, the turning on indication information is generated. Correspondingly, when the charging duration is greater than or equal to the second voltage threshold, it means that the battery is in the late stage of charging. At this time, the heating of the battery cell may be stopped, that is, the turning off indication information is generated.

In some embodiments, in the case that the first state parameter of the battery cell includes the current of the battery cell, the battery management system is further configured to acquire the current of the battery cell during the charging of the battery cell; the turning on indication information is generated in the case that the current of the battery cell is less than or equal to the first current threshold; the turning off indication information is generated in the case that the current of the battery cell is greater than or equal to the second current threshold; the second current threshold is greater than the first current threshold.

Here, the first current threshold may be determined based on a current corresponding to when the battery cell enters the charging plateau corresponding to the manganese element. Illustratively, the current corresponding to when the battery cell enters the charging plateau corresponding to the manganese element may be determined as the first current threshold, or a current smaller than the current corresponding to when the battery cell enters the charging plateau corresponding to the manganese element may be determined as the first current threshold.

In the embodiments of the present application, the battery management system may acquire the current of the battery cell in real time during the charging of the battery cell. When the current is less than or equal to the first current threshold, it means that the battery is in the early stage of charging. At this time, the battery cell can be heated, that is, the turning on indication information is generated. Correspondingly, when the charging duration is greater than or equal to the second current threshold, it means that the battery is in the late stage of charging. At this time, the heating of the battery cell may be stopped, that is, the turning off indication information is generated.

In some embodiments, the temperature range described above includes 30 °C to a safety temperature threshold of the battery pack; the safety temperature threshold is a temperature that can cause a safety event in the battery pack; the safety event includes at least one of the following: thermal runaway and a reduction in the number of battery cycles. Illustratively, the temperature range includes at least one of the following: 30 °C to 60 °C, 30 °C to 55 °C, 30 °C to 50 °C, 30 °C to 45 °C, 30 °C to 40 °C, 40 °C to 50 °C, and 40 °C to 45 °C.

It can be understood that if the temperature of the battery cell is relatively low, the charging capacity of the battery cell cannot be effectively improved, and if the temperature of the battery cell is relatively high, other damages may be caused to the battery pack. Therefore, it is necessary to control the temperature of the battery cell to be within a preset temperature range, so as to reduce damages to the battery cell while improving the charging capacity of the battery cell.

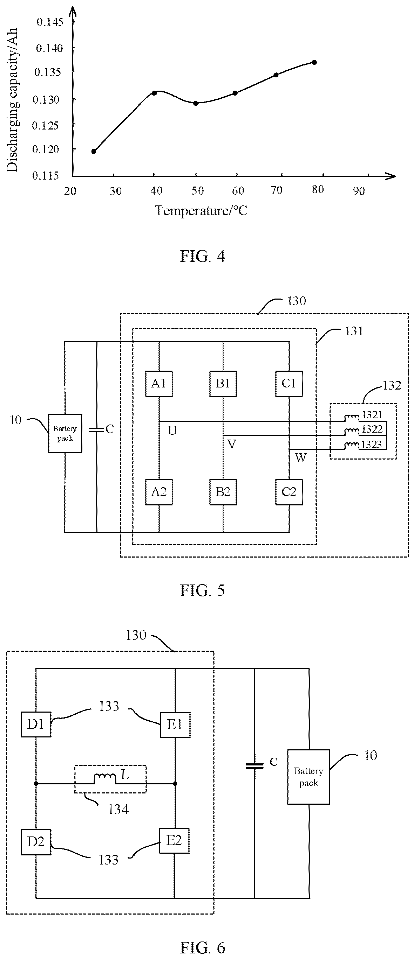

The preset temperature range is described in detail below in conjunction with FIG. 3 and FIG. 4.

In the embodiments of the present application, the capacity of the battery cell at different temperatures can be tested to obtain FIG. 3 and FIG. 4. FIG. 3 and FIG. 4 show the changes in the charging capacity and discharging capacity of the battery cell with temperature.

The positive electrode active material, binder and conductive agent of the positive electrode plate of the battery cell used for testing and corresponding mass proportions are 97.3% LiFe_{0.4}Mn_{0.6}PO₄ + 2.2% PVDF + 0.5% SP, the compaction density is 2.35 g/cm³, and the thickness is 213 µm. The negative electrode active material, binder, dispersant and conductive agent of the negative electrode plate of the battery cell and corresponding mass proportions are 96.5% graphite + 1.3% SBR + 1.1% CMC + 0.4% SP, the compaction density is 1.65 g/cm³, and the thickness is 142 µm. The electrolytic solution of the battery cell is prepared using corresponding solvent, additive, and lithium salt according to corresponding contents. For example, ethylene carbonate, dimethyl carbonate, and 1,2-propylene carbonate are mixed in a volume ratio of 1:1:1, and then LiPF₆ is uniformly dissolved in the solution described above to obtain an electrolytic solution. The concentration of LiPF₆ in the electrolytic solution is 1 mol/L.

As an example, during the test, the battery cell is placed in a constant temperature oven at 25 °C, left to stand for 2 hours, discharged to 2.5 V at 0.33 C, and then discharged to 2.0 V at 0.02 C; after standing for 2 hours, the battery cell is charged to 4.3 V at 0.33 C, and charged at a constant voltage to a cutoff current of 0.05 C, through which the charging capacity at 25 °C may be obtained; after standing for 2 hours, the battery cell is discharged to 2.0 V at 0.33 C, through which the discharging capacity at 25 °C may be obtained.

The temperature of the constant temperature oven is changed, and the corresponding charging capacity and discharging capacity can be obtained for each temperature. Based on the charging capacity and discharging capacity corresponding to a plurality of temperatures, curves of the test results for the charging capacity and the discharging capacity as shown in FIG. 3 and FIG. 4 are plotted.

As shown in Table 1, at 25 °C, i.e., normal temperature, the charging capacity of the battery cell is 0.119 Ah, and the discharging capacity is 0.119 Ah; at 40 °C, the charging capacity of the battery cell is 0.131 Ah, and the discharging capacity is 0.132 Ah; at 50 °C, the charging capacity of the battery cell is 0.132 Ah, and the discharging capacity is 0.130 Ah; at 60 °C, the charging capacity of the battery cell is 0.134 Ah, and the discharging capacity is 0.133 Ah; at 70 °C, the charging capacity of the battery cell is 0.137 Ah, and the discharging capacity is 0.136 Ah; at 80 °C, the charging capacity of the battery cell is 0.139 Ah, and the discharging capacity is 0.139 Ah.

**Table 1**

| Temperature (°C) | Charging capacity (Ah) | Discharging capacity (Ah) |
|---|---|---|
| 25 | 0.119 | 0.119 |
| 40 | 0.131 | 0.132 |
| 50 | 0.132 | 0.130 |
| 60 | 0.134 | 0.133 |
| 70 | 0.137 | 0.136 |
| 80 | 0.139 | 0.139 |

It can be seen from FIG. 3 and FIG. 4 that as the charging temperature of the battery cell increases, the charging capacity and discharging capacity of the battery cell show an overall increasing trend, with a certain decline between 45 °C and 50 °C. It can be understood that the higher the temperature of the battery cell, the higher the charging capacity and discharging capacity of the battery cell, and the lower the temperature of the battery cell, the lower the probability of thermal runaway of the battery cell. In order to increase the charging capacity and reduce the failure rate of the battery cell, it is necessary to control the temperature of the battery cell to be within the preset temperature range. The temperature range is set to 40 °C to 50 °C. In some embodiments, when the temperature range is 40 °C to 45 °C, not only can the charging capacity and discharging capacity of the battery cell be improved to meet conventional charging requirements, but also the damage caused by high temperature to the battery pack or even the vehicle is not increased.

In some embodiments, the battery management system is configured to acquire the first state parameter of the battery cell before the charging; determine, based on the first state parameter of the battery cell, a control instruction for a heating apparatus, and send the control instruction to the heating apparatus; the battery management system is further configured to control, in the case that the temperature of the battery cell is within the temperature range, the battery cell to enter the charging.

In the embodiments of the present application, the first state parameter may be the temperature of the battery cell. In the case that the temperature of the battery cell is less than or equal to the first temperature threshold, a control instruction including turning on indication information is generated, and the turning on indication information is sent to the heating apparatus, which may heat the battery cell in response to the turning on indication information; in the case that the acquired temperature of the battery cell is within the temperature range, the battery management system controls the battery cell to enter the charging. In the case that a plurality of battery cells are provided and the temperatures of the plurality of battery cells are less than or equal to the first temperature threshold, the heating apparatus can be controlled to heat the plurality of battery cells in parallel, and in the case that the plurality of battery cells are all within the temperature range, the plurality of battery cells are controlled to all enter the charging.

In some embodiments, in the case that the temperature of the battery cell is greater than or equal to the second temperature threshold, a control instruction including turning off indication information is generated and sent to the heating apparatus, which may stop heating the battery cell in response to the turning off indication information. Because the current temperature of the battery cell is relatively high, even if the heating apparatus stops heating the battery cell, the temperature of the battery cell will be within the temperature range. Therefore, in the case that the acquired temperature of the battery cell is within the temperature range, the battery management system controls the battery cell to enter the charging.

In some embodiments, the heating apparatus is electrically connected to the battery cell, and the control instruction includes turning on indication information; the heating apparatus is configured to provide, in response to the turning on indication information, a pulse current to the battery cell, so as to enable the battery cell to generate heat during passage of the pulse current through the battery cell.

In the embodiments of the present application, during the process when the pulse current passes through the battery cell, the battery cell can generate heat due to its own internal resistance, so as to achieve self-heating of the battery cell. This heating mode does not require the arrangement of additional hardware heating structures, which can reduce the structural complexity of the battery cells.

In some embodiments, the heating apparatus includes a motor in an electrical device where the battery pack is located, and the motor includes a winding and a control circuit connected between the winding and the battery pack; the battery management system is further configured to send the control instruction to a controller in the electrical device; the controller in the electrical device is configured to control, in response to the turning on indication information in the control instruction, the control circuit, so as to enable the motor to charge the battery cell based on the pulse current.

Here, the electric device may be a vehicle, and the controller in the electric device may be a vehicle control unit (VCU) in the vehicle.

In the embodiments of the present application, the controller in the electrical device controls the control circuit in response to the turning on indication information in the control instruction, so as to enable the motor to charge the battery cell based on the pulse current. In this way, the heat generated by the working loss of the motor in the electrical device may be used to heat the battery cell without consuming additional electrical energy.

FIG. 5 shows a schematic circuit diagram of a heating apparatus. As shown in FIG. 5, the heating apparatus includes a motor in an electrical device where a battery pack is located. The motor includes a winding 132 and a control circuit 131 connected between the winding 132 and the battery pack.

Here, the control circuit 131 may be implemented by an inverter in a drive system of the motor, and the inverter may be implemented, for example, by using bridge arm switches of an insulated gate bipolar transistor (IGBT), i.e., switch A1, switch A2, switch B1, switch B2, switch C1, and switch C2 shown in FIG. 5.

FIG. 5 illustrates a three-phase motor as an example, including three-phase windings, namely the winding 1321, the winding 1322, and the winding 1323. Accordingly, the control circuit 131 is a three-phase bridge arm circuit, including three bridge arms connected to the three windings, respectively, namely the bridge arm where the switch A1 and the switch A2 are located, the bridge arm where the switch B1 and the switch B2 are located, and the bridge arm where the switch C1 and the switch C2 are located.

During the heating process, the switches in the control circuit 131 are controlled separately based on the corresponding timing, such that the current directions of different loops formed between the battery pack 101, the switches, and the winding 132 are different, thereby generating a pulse current, and thus alternately charging and discharging the battery cell, and heating the battery cell during the process.

In some embodiments, the heating apparatus includes a heating circuit, and the heating circuit includes an energy storage element and a switch module; the switch module is configured to form, in response to the turning on indication information in the control instruction, a loop for the energy storage element to charge the battery cell and a loop for the battery to discharge the energy storage element, so as to enable the energy storage element to charge the battery cell based on the pulse current.

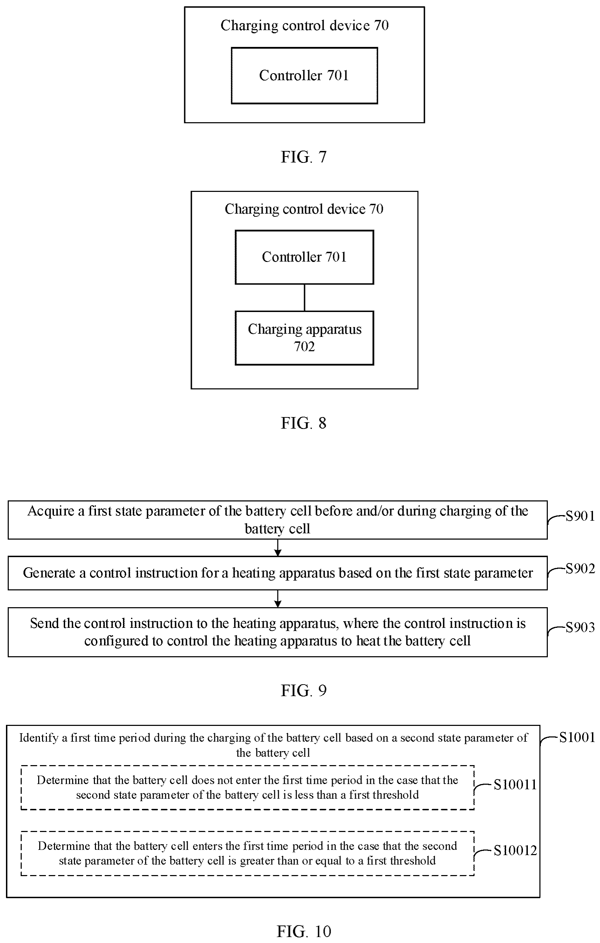

Illustratively, as shown in FIG. 6, the heating circuit 130 includes a switch module 133 and an energy storage element 134. The switch module 133 includes a bridge arm circuit formed by switch D1, switch D2, switch E1, and switch E2, where switch D1 and switch D2 are located in one bridge arm, and switch E1 and switch E2 are located in another bridge arm. Switch D1, switch D2, switch E1, and switch E2 may be, for example, IGBTs. The energy storage element 134 may, for example, include an inductor, a capacitor, or a combination of an inductor and a capacitor. FIG. 8 illustrates an inductor L as an example. One end of the inductor L is connected between the switch D1 and the switch D2, and the other end is connected between the switch E1 and the switch E2.

During the heating process, by controlling the switches in the switch module, a loop for the battery cell to discharge to the energy storage element and a loop for the energy storage element to charge the battery cell are formed, thereby forming a pulse current to alternately charge and discharge the battery cell and heat the battery cell during the process.

In the embodiments of the present application, an additional heating circuit is used to heat the battery cell. In the case that the electrical device, e.g., a vehicle, has not yet been connected to the charging apparatus, or the motor of the electrical device is working, the battery cell can be heated in advance, which saves the time of the user.

In some embodiments, the heating apparatus is disposed on the exterior of the housing of the battery pack; the heating apparatus is configured to generate heat in response to the turning on indication information in the control instruction, so as to perform heat transfer on the battery cell through the housing of the battery pack, thereby realizing heating of the battery cell.

In the embodiments of the present application, the heating apparatus disposed on the exterior of the housing of the battery pack can generate heat during the charging of the battery cell, that is, the battery cell can be heated simultaneously during the charging of the battery cell, and the charging of the battery cell will not be affected.

In some embodiments, the heating apparatus includes a control circuit and a heating film. The heating film includes a conductive layer and an insulating layer located between the conductive layer and the housing. The control circuit is configured to provide, in response to the turning on indication information, a pulse current to the conductive layer; the conductive layer is configured to generate heat during the passage of the pulse current and transfer the heat to the battery cell; and the insulating layer is configured to electrically isolate the conductive layer from the battery.

In the embodiments of the present application, the control circuit may be the control circuit in the embodiment of FIG. 5.

In some embodiments, the heating apparatus may include an energy storage unit, and the control circuit is configured to control the energy storage unit to provide a pulse current to the conductive layer in response to the turning on indication information. The conductive layer includes a resistive heating element, e.g., a metal heating wire, etc., which can generate heat after being energized, such that the conductive layer can transfer the heat to the battery cell.

Here, the heating film may be, for example, adhered to the surface of the battery cell by an adhesive material, and the generated heat may be transferred to the interior of the battery cell through the contact between the heating film and the surface of the battery cell. The heating film has the advantages of a simple heating structure and the ability to be integrated into the battery system.

In some embodiments, the heating apparatus includes a control unit, a heat-generating component, and a heat-conducting component. A heat-conducting medium is accommodated in the heat-conducting component; the control unit is configured to provide, in response to the turning on indication information, a pulse current to the heat-generating component; the heat-generating component is configured to generate heat during the passage of the current pulse, and the heat-conducting medium in the heat-conducting component is configured to transfer the heat generated by the heat-generating component to the battery cell.

In the embodiments of the present application, the heat-generating component may be an active heat-generating device, e.g., a positive temperature coefficient (PTC) heating component or a high voltage heater (HVH). The heat-conducting component may be, for example, a water-cooling component, and accordingly, the heat-conducting medium in the heat-conducting component may be a liquid. Optionally, the heat-conducting component can reuse the water-cooling plate of the battery cell, the heat generated by the heat-generating component is transferred to the liquid in the water-cooling plate, and the battery cell is heated or has the temperature maintained by the liquid.

In some embodiments, the heating apparatus may also be a passive heat-generating device. The heating apparatus includes a heat pump and a heat circulation pipe disposed around the battery pack, the heat circulation pipe is connected to the heat pump, and the heat pump is configured to control circulating inflow and outflow of the liquid in the heat circulation pipe in response to the turning on indication information in the control instruction, so as to heat the battery cell through the liquid during the process. The heat source of the heat pump may come from, for example, the heat generated during the operation of the battery cell. The hot liquid in the heat circulation pipe undergoes heat exchange after passing through the heat pump. For example, the temperature of the liquid entering the heat circulation pipe from the heat pump is relatively high, while the temperature of the liquid flowing out of the heat circulation pipe to the heat pump is relatively low. In this way, during the circulation of the liquid, heat is brought to the battery cell through the liquid.

In some embodiments, the heat pump is provided with a control valve, and the battery management system may determine the opening degree of the control valve according to the difference between the temperature of the battery cell and the first temperature threshold, so as to adjust the temperature of the liquid entering the heat circulation pipeline. For example, the greater the difference between the temperature of the battery cell and the first temperature threshold, the greater the opening degree of the control valve, and the higher the temperature of the liquid entering the heat circulation pipe; on the contrary, the smaller the difference between the temperature of the battery cell and the first temperature threshold, the smaller the opening degree of the control valve, and the relatively lower the temperature of the liquid entering the heat circulation pipe.

In some embodiments, the battery management system is further configured to determine a target heating mode for heating the battery cell from at least two heating modes based on the temperature of the battery cell; the battery management system is further configured to send the control instruction to the corresponding heating apparatus based on the target heating mode. The at least two heating modes include: a first heating mode for heating the battery cell based on a pulse current, and a second heating mode for heating the battery cell by means of heat transfer.

It can be understood that since the scenarios in which different heating modes are applied are different, for example, the heating efficiency and the ambient temperature of the battery cell are different, a suitable heating mode may be selected according to the temperature of the battery cell, so as to improve the heating efficiency and shorten the time for the battery cell to reach a preset temperature range.

In some embodiments, the battery management system is further configured to determine a temperature difference between the temperature of the battery cell and the lower limit of the temperature range; determine the target heating mode to be the first heating mode in the case that the temperature difference is greater than a third temperature threshold; determine the target heating mode to be the second heating mode in the case that the temperature difference is less than or equal to the third temperature threshold.

In the embodiments of the present application, when the temperature difference between the temperature of the battery cell and the lower limit of the temperature range is greater than the third temperature threshold, it means that the gap between the current temperature of the battery cell and the temperature range is large. In order to improve the heating efficiency and enable the battery cell to enter the temperature range as soon as possible, a heating mode with a higher heating efficiency can be selected from at least two heating modes, that is, a first heating mode for heating the battery based on a pulse current can be used. When the temperature difference is less than or equal to the third temperature threshold, it means that the gap between the current temperature of the battery cell and the temperature range is small. Even if a heating mode with a lower heating efficiency is used, the battery cell can be within the temperature range when the battery cell enters the first time period. In order to reduce energy consumption, a second heating mode for heating the battery by means of heat transfer can be used.

In some embodiments, the battery management system is further configured to determine a target heating mode for heating the battery cell from at least two heating modes based on the temperature rise rate of the battery cell and the temperature of the battery cell under different heating modes.

It can be understood that when the temperature of the battery cell changes, the internal resistance of the battery cell will change, and the changed internal resistance will affect the temperature rise rate of the battery cell under different heating modes. Therefore, it is necessary to determine a target heating mode based on the temperature rise rate of the battery cell and the temperature of the battery cell under different heating modes.

In some embodiments, the battery management system is further configured to:
determine a temperature difference between the temperature of the battery cell and the lower limit of the temperature range, and a duration required for the battery cell to enter the plateau corresponding to the manganese element;
based on a magnitude relationship between the temperature difference and the third temperature threshold, and a magnitude relationship between the duration for the battery cell to enter the first time period and a second duration threshold, determine a target heating mode for heating the battery cell from at least two heating modes.

Here, in the case that the temperature difference is greater than the third temperature threshold, and the duration for the battery cell to enter the first time period is greater than the second duration threshold, the target heating mode is determined to be a heating mode with a high temperature rise rate between the first heating mode and the second heating mode; in the case that the temperature difference is less than or equal to the third temperature threshold, and or the required duration is less than or equal to the second duration threshold, the target heating mode is determined to be a heating mode with a relatively low temperature rise rate between the first heating mode and the second heating mode.

In the embodiments of the present application, when the temperature difference is greater than the third temperature threshold, it means that the gap between the current temperature of the battery cell and the temperature range is relatively large. When the duration for the battery cell to enter the first time period is greater than the second duration threshold, it means that the battery cell has entered the first time period (the charging plateau corresponding to the manganese element) for a relatively long time. Therefore, it is necessary to enable the battery cell to enter the temperature range as soon as possible, that is, to determine the target heating mode to be a corresponding heating mode with a high temperature rise rate between the first heating mode and the second heating mode. When the temperature difference is less than or equal to the third temperature threshold, it means that the gap between the current temperature of the battery cell and the temperature range is relatively small. When the duration for the battery cell to enter the first time period is less than or equal to the second duration threshold, it means that the duration for the battery cell to enter the first time period (the charging plateau corresponding to the manganese element) is relatively short. In order to reduce energy consumption, the target heating mode can be determined to be a corresponding heating mode with a low temperature rise rate between the first heating mode and the second heating mode.

In some embodiments, the battery management system is further configured to: send a charging parameter to a charging apparatus, where the charging parameter includes information of a constant current and a constant voltage, so as to enable the charging apparatus to charge the battery based on the constant current, and in the case that the battery cell is charged to a voltage greater than or equal to a voltage threshold based on the constant current, charge the battery based on the constant voltage until the battery reaches a fully charged state.

In the embodiments of the present application, the battery management system sends information including a constant current and a constant voltage to a charging apparatus, so as to enable the charging apparatus to first perform constant-current charging on the battery cell, and then perform constant-voltage charging on the battery cell when the voltage reaches a preset threshold. The constant voltage for performing constant-voltage charging on the battery cell is a voltage of the battery cell when the battery cell enters the first time period. The charging apparatus may be a common charging pile, a super charging pile, a charging pile supporting vehicle to grid (V2G) mode, a battery charger, or other charging apparatuses used for charging and/or discharging a battery. The embodiments of the present application do not limit the specific type and specific application scenario of the charging apparatus.

In some embodiments, when the SOC of the battery cell is greater than or equal to a certain threshold, constant-current charging can be performed on the battery cell based on a first constant current until a voltage threshold is reached, and then constant-voltage charging is performed on the battery based on a first constant voltage until the battery reaches a fully charged state; or, when the SOC of a battery cell is less than the threshold, the battery cell can be first charged based on a second constant current until the SOC of the battery cell reaches the threshold, then constant-current charging is performed on the battery cell based on a first constant current until a voltage threshold is reached, and constant-voltage charging is performed on the battery based on a first constant voltage until the battery reaches a fully charged state.

Illustratively, the first constant current used in the constant-current charging stage may be between 0.01 C and 0.1 C, and/or the first constant voltage used in the constant-voltage charging stage may be between 3.95 V and 4.35 V.

In some embodiments, based on a total molar amount of the manganese element and the iron element in the lithium-containing transition metal phosphate, a molar proportion of the manganese element is greater than or equal to 10% and less than or equal to 90%; a molar proportion of the iron element is greater than or equal to 10% and less than or equal to 90%.

In some embodiments, based on a total molar amount of the manganese element and the iron element in the lithium-containing transition metal phosphate, a molar proportion of the manganese element is greater than or equal to 60% and less than or equal to 80%; a molar proportion of the iron element is greater than or equal to 20% and less than or equal to 40%.

It can be understood that in the lithium-containing transition metal phosphate, the manganese element and the iron element have suitable molar proportions, which improves the energy density while mitigating the problem of manganese dissolution.

In some embodiments, the lithium-containing transition metal phosphate includes LiₓMn_{y1}Fe_{y2}P_{z1}Oₐ₁Q_{b}, where Q includes at least one of Zn, Al, Na, K, Ti, V, Mg, Nb, Mo, W, B, S, Si, N, F, Cl, and Br; 0.8 ≤ x ≤ 1.2, 0.1 ≤ y1 ≤ 0.9, 0.1 ≤ y2 ≤ 0.9, 0.9 ≤ z ≤1, 3.5 ≤ a ≤4, and 0 ≤ b ≤ 0.2.

It should be noted that the chemical formula described above is not limited to a class of substances represented by the chemical formula, but also includes substances formed after further modification based on the class of substances. The modification includes doping, coating, and the like. The chemical formula is determined before the lithium-containing transition metal phosphate is added to the positive electrode slurry. After the formation and cycling of the battery cell, the mole numbers of the elements in the chemical formula, such as Li and O, may fluctuate.

In some embodiments, the positive electrode active material further includes a ternary material and/or a lithium iron phosphate material.

It can be understood that based on the requirements of energy density, a ternary material may be further mixed into the positive electrode active material; and/or, based on the requirements of cycle life, a lithium iron phosphate material may be further mixed into the positive electrode active material.

In some embodiments, based on a total mass of the positive electrode active material, a mass proportion of the lithium-containing transition metal phosphate is greater than or equal to 25%.

In some embodiments, based on a total mass of the positive electrode active material, a mass proportion of the lithium-containing transition metal phosphate is greater than or equal to 65%.

It should be noted that among the positive electrode active materials, lithium-containing transition metal phosphate including at least a manganese element has a higher mass proportion, thereby taking into account both safety characteristics and energy density.

In some embodiments, the embodiments of the present application further provide a charging control device for charging a battery pack. The battery pack includes at least one battery cell, a temperature sensor, and a battery management system. The temperature sensor is configured to detect the temperature of the battery cell.

A positive electrode plate of the battery cell includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes at least a manganese element.

Taking the compound LiMn_{0.80}Fe_{0.20}PO₄ as an example, the preparation method for the compound LiMn_{0.80}Fe_{0.20}PO₄ is illustrated. The preparation method may include, for example, the following steps.

In step S1, Fe-doped manganese oxalate is prepared.

For example, 919.4 g of manganese carbonate and 231.7 g of ferrous carbonate may be added to a mixer and mixed thoroughly for 6 hours, and the obtained mixture is transferred to a reactor. 5 L of deionized water and 1260.6 g of oxalic acid dihydrate are added, and the mixture is heated to 80 °C and stirred at a rotation speed of 500 rpm for 6 hours for uniform mixing until the reaction is terminated and no bubbles are generated, thus obtaining a Fe-doped manganese oxalate suspension. Then, the suspension is filtered, dried at 120 °C, and sand-milled to obtain ferromanganese oxalate particles with a particle size of 100 nm.

In step S2, LiMn_{0.80}Fe_{0.20}PO₄ is prepared.

For example, 1791.4 g of ferromanganese oxalate (calculated as C₂O₄Mn_{0.80}Fe_{0.20}·2H₂O) prepared in step S1, 369.4 g of lithium carbonate, and 1150.1 g of ammonium dihydrogen phosphate may be added to 20 L of deionized water and stirred thoroughly. The mixture is uniformly mixed and reacted at 80 °C for 10 hours to obtain a slurry. The slurry is transferred to a spray drying device for spray drying and granulation, and dried at a temperature of 250 °C to obtain a powder. The powder is sintered in a roller kiln at 700 °C for 4 hours under an atmosphere such as 90% nitrogen and 10% hydrogen.

In some embodiments, the lithium-containing transition metal phosphate has a chemical formula of Li₁₊ₜMn_{1-c}Fe_{c}P_{1-z}R_{z}O₄, where t is any value in the range of -0.100 to 0.100, c is any value in the range of 0.001 to 0.500, z is any value in the range of 0.001 to 0.100, and R includes one or more elements selected from B, S, Si, and N.

Here, the values of t, c, and z are configured such that the entire compound remains electrically neutral. Optionally, the ratio of c to 1-c may be 1:10 to 1:1, further, 1:4 to 1:1. Here, c represents the sum of the stoichiometric numbers of the doping element Fe at the Mn site. Optionally, the ratio of z to 1-z is 1:9 to 1:999, further, 1:499 to 1:249. Here, z represents the sum of the stoichiometric numbers of the doping element R at the P site.

Illustratively, the preparation method for the compound Li₁₊ₜMn_{1-c}Fe_{c}P_{1-z}R_{z}O₄ may include the following steps.

In step S1, a manganese source, an iron source, and an acid are dissolved in a solvent and stirred to generate a suspension of a manganese salt doped with an element Fe. The suspension is filtered, and a filter cake is dried to obtain a manganese salt doped with an element Fe.

In step S2, a lithium source, a phosphorus source, a source of an element R, a solvent, and the manganese salt doped with an element Fe obtained in step S1 are added to a reaction vessel, ground, and mixed to obtain a slurry.

In step S3, the slurry obtained in step S2 is transferred to a spray drying device for spray drying and granulation to obtain particles.

In step S4, the particles obtained in step S3 are sintered to obtain a positive electrode active material.

The manganese source is, for example, a manganese-containing substance that can be used to prepare lithium manganese phosphate, including but not limited to one of or a combination of several of elemental manganese, manganese dioxide, manganese phosphate, manganese oxalate, and manganese carbonate. The iron source is, for example, at least one selected from a simple substance, oxide, phosphate, oxalate, carbonate, and sulfate of iron. The acid is, for example, one or more selected from hydrochloric acid, sulfuric acid, nitric acid, phosphoric acid, organic acids, and the like, such as oxalic acid. The source of an element R is, for example, at least one selected from sulfate, borate, nitrate and silicate of an element R.

Taking the compound Li_{1.001}Mn_{0.999}Fe_{0.001}P_{0.999}Si_{0.001}O₄ as an example, the preparation method therefor may include the following steps.

In step S1, Fe-doped manganese oxalate is prepared.

For example, 1148.2 g of manganese carbonate and 1.2 g of ferrous carbonate are added to a mixer and mixed thoroughly for hours, and the obtained mixture is transferred to a reactor. 5 L of deionized water and 1260.6 g of oxalic acid dihydrate are added, and the mixture is heated to 80 °C and stirred at a rotation speed of 500 rpm for 6 hours for uniform mixing until the reaction is terminated and no bubbles are generated, thus obtaining a Fe-doped manganese oxalate suspension. Then, the suspension is filtered, dried at 120 °C, and sand-milled to obtain ferromanganese oxalate particles with a particle size of 100 nm.

In step S2, Li_{1.001}Mn_{0.999}Fe_{0.001}P_{0.999}Si_{0.001}O₄ is prepared.

1789.6 g of ferromanganese oxalate (calculated as C₂O₄Mn_{0.999}Fe_{0.001}·2H₂O) prepared in step S1, 369.8 g of lithium carbonate, 1148.9 g of ammonium dihydrogen phosphate, and 0.8 g of silicic acid are added to 20 L of deionized water and stirred thoroughly. The mixture is uniformly mixed and reacted at 80 °C for 10 hours to obtain a slurry. The slurry is transferred to a spray drying device for spray drying and granulation, and dried at a temperature of 250 °C to obtain a powder. The powder is sintered in a roller kiln at 700 °C for 4 hours under an atmosphere such as 90% nitrogen and 10% hydrogen.

In some embodiments of the present application, the lithium-containing transition metal phosphate has the following chemical formula:

Li_{1+w}CₘMn₁₋ᵤFeᵤP₁₋ₐRₐO₄₋ₙDₙ,

where C includes one or more elements selected from Zn, Al, Na, K, Mg, Nb, Mo, and W, R includes one or more elements selected from B, S, Si, and N, D includes one or more elements selected from S, F, Cl, and Br, w is any value in the range of -0.100 to 0.100, u is any value in the range of 0.001 to 0.500, a is any value in the range of 0.001 to 0.100, n is any value in the range of 0.001 to 0.1, and m is any value in the range of 0.9 to 1.1.

Similarly, the values of w, u, a, and m described above are configured such that the entire compound remains electrically neutral.

Illustratively, the preparation method for the compound Li_{1+w}CₘMn₁₋ᵤFeᵤP₁₋ₐRₐO₄₋ₙDₙ may include the following steps.

In step S1, a manganese source, an iron source, and an acid are dissolved in a solvent and stirred to generate a suspension of a manganese salt doped with an element Fe. The suspension is filtered, and a filter cake is dried to obtain a manganese salt doped with an element Fe.

In step S2, a lithium source, a phosphorus source, a source of an element C, a source of an element R, and a source of an element D, a solvent, and the manganese salt doped with an element Fe obtained in step S1 are added to a reaction vessel, ground, and mixed to obtain a slurry.

In step S3, the slurry obtained in step S2 is transferred to a spray drying device for spray drying and granulation to obtain particles.

In step S4, the particles obtained in step S3 are sintered to obtain a positive electrode active material.

The source of an element C is, for example, selected from at least one of a simple substance, oxide, phosphate, oxalate, carbonate, and sulfate of an element C, and the manganese source is, for example, a manganese-containing substance that can be used to prepare lithium manganese phosphate, including but not limited to, one of or a combination of elemental manganese, manganese dioxide, manganese phosphate, manganese oxalate, and manganese carbonate. The iron source is, for example, at least one selected from a simple substance, oxide, phosphate, oxalate, carbonate, and sulfate of iron. The acid is, for example, one or more selected from hydrochloric acid, sulfuric acid, nitric acid, phosphoric acid, organic acids, and the like, such as oxalic acid. The source of an element R is, for example, at least one selected from sulfate, borate, nitrate and silicate of an element R. The source of an element D is, for example, at least one selected from a simple substance and an ammonium salt of an element D.

If the value of x is too small, the lithium content of the entire system will decrease, affecting the capacity per gram of the material. The y value will limit the total amount of all doping elements. If y is too small, that is, the doping amount is too little, the doping elements will have no effect. If y exceeds 0.5, the Mn content in the system will be relatively low, affecting the voltage platrau of the material. The R element is doped at the position of P. Since the P-O tetrahedron is relatively stable and a too-large z value will affect the stability of the material, the a value is limited to 0.001 to 0.100. More specifically, w is any value in the range of -0.100 to 0.100, u is any value in the range of 0.001 to 0.500, a is any value in the range of 0.001 to 0.100, n is any value in the range of 0.001 to 0.1, and m is any value in the range of 0.9 to 1.1. For example, the 1+x is selected from the range of 0.9 to 1.1, for example, 0.97, 0.977, 0.984, 0.988, 0.99, 0.991, 0.992, 0.993, 0.994, 0.995, 0.996, 0.997, 0.998, or 1.01, the x is selected from the range of 0.001 to 0.1, for example, 0.001 or 0.005, the y is selected from the range of 0.001 to 0.5, for example, 0.001, 0.005, 0.02, 0.05, 0.1, 0.15, 0.2, 0.25, 0.3, 0.34, 0.345, 0.349, 0.35, or 0.4, the z is selected from the range of 0.001 to 0.1, for example, 0.001, 0.005, 0.08, or 0.1, the n is selected from the range of 0.001 to 0.1, for example, 0.001, 0.005, 0.08, or 0.1, and the positive electrode active material is electrically neutral.

Unless otherwise specified, in the chemical formula described above, in the case that a certain doping site has two or more elements, the limitation on the numerical range of w, u, a, or m is not only a limitation on the stoichiometric number of each element at the site, but also a limitation on the sum of the stoichiometric numbers of all elements at the site. For example, in the case of a compound having a chemical formula of Li_{1+w}Mn₁₋ᵤFeᵤP₁₋ₐRₐO₄, if R is two or more elements R1, R2, ..., Rn, the stoichiometric numbers z1, z2, ..., zn of R1, R2, ..., Rn each must fall within a numerical range of z limited in the present application, and the sum of z1, z2, ..., zn must also fall within the numerical range. Similarly, in the case that C is two or more elements, the limitation on the numerical range of the stoichiometric number of C also has the meaning described above.

In some embodiments, the embodiments of the present application further provide a charging control device, and the charging control device is configured to control a heating apparatus to heat a battery cell; the battery system further includes a battery pack, a temperature sensor, and a battery management system; the battery pack includes at least one battery cell, where the temperature sensor is configured to obtain a temperature of the battery cell; a positive electrode plate of the battery cell includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes a manganese element. As shown in FIG. 7, the charging control device 70 includes:

a controller 701, configured to acquire a first state parameter of the battery cell from the battery management system before and/or during charging of the battery cell; generate, based on the first state parameter of the battery cell, a control instruction for a heating apparatus, where the control instruction is configured to control the heating apparatus to heat the battery cell.

In the embodiments of the present application, the charging control device may be a control device on a vehicle, or a control device of a charging apparatus (e.g., a charging pile).

In some embodiments, the controller of the charging control device is configured to send the control instruction to the heating apparatus, so as to enable the temperature of the first time period during the charging of the battery cell to be within a preset temperature range.

In some embodiments, the controller of the charging control device is configured to perform at least one of the following:
generate turning on indication information in the case that the temperature of the battery cell is less than or equal to a first temperature threshold, where the first temperature threshold is less than or equal to an upper limit temperature of the temperature range;
generate turning off indication information in the case that the temperature of the battery cell is greater than or equal to a second temperature threshold, where the second temperature threshold is greater than or equal to a first temperature threshold, and the first temperature threshold is greater than or equal to a lower limit temperature of the temperature range;
generate first keeping information in the case that the temperature of the battery cell is within the temperature range and the heating apparatus is in a turn-on state;
generate second keeping information in the case that the temperature of the battery cell is within the temperature range and the heating apparatus is in a turn-off state.

In some embodiments, in the case that the first state parameter of the battery cell includes one of the following: a state of charge of the battery cell, a charging duration of the battery cell, a voltage of the battery cell, and a current of the battery cell, the controller of the charging control device is configured to perform at least one of the following:
generate turning on indication information in the case that the first state parameter of the battery cell is less than or equal to a first threshold;
generate turning off indication information in the case that the first state parameter of the battery cell is greater than or equal to a second threshold, where the value of the first threshold is related to the first state parameter of the battery cell, and the first state parameter of the battery cell includes: a state parameter of the battery cell when the battery cell is in the first time period.

In some embodiments, the first state parameter of the battery cell includes a state of charge of the battery cell; the controller of the charging control device is configured to perform at least one of the following:
generate turning on indication information in the case that the SOC of the battery cell is less than or equal to a first SOC threshold;
generate turning off indication information in the case that the SOC of the battery cell is greater than or equal to a second SOC threshold, where the second SOC threshold is greater than the first SOC threshold, and the first SOC threshold is determined based on a molar proportion of an iron element and/or a molar proportion of a manganese element in iron and manganese elements of the positive electrode active material.

In some embodiments, as shown in FIG. 8, the charging control device 70 includes a charging apparatus 702, and the charging apparatus further includes:
a charging module, configured to charge at least one battery cell in the battery pack.

In the embodiments of the present application, the controller of the charging control device can control the charging module to charge at least one battery cell in the battery pack.

In some embodiments, the controller is configured to determine whether the charging apparatus is reserved or occupied; in the case that it is determined that the charging apparatus is reserved or occupied, generate a charging rejection instruction; in the case that the control module determines that the charging apparatus is not reserved or occupied, generate a charging permission instruction, wherein the charging permission instruction is configured to indicate that the charging apparatus is not reserved or occupied; send the charging rejection instruction or the charging permission instruction to the battery management system; receive a charging reservation instruction sent by the battery management system based on the charging permission instruction, wherein the charging reservation instruction is configured to request a reservation for the charging apparatus; and send a charging instruction to the battery management system in response to the charging reservation instruction.

In the embodiments of the present application, after the battery management system receives a charging permission instruction, the battery management system can send a charging reservation instruction to the controller in response to the charging permission instruction; after the controller receives the charging reservation instruction, the controller can send a charging instruction to the battery management system in response to the charging reservation instruction, thereby completing the occupation of the charging apparatus, and after the battery management system sends a feedback message generated based on the charging instruction to the controller, the controller can control the charging module to charge at least one battery cell in the battery pack.

In some embodiments, as shown in FIG. 9, the embodiments of the present application further provide a charging method for a battery pack, which is applied to a battery management system in the battery system; the battery system further includes: a battery pack, a temperature sensor, and a heating apparatus; the battery pack includes at least one battery cell, where: the temperature sensor is configured to obtain a temperature of the battery cell; a positive electrode plate of the battery cell includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes at least a manganese element; the charging method for the battery pack may be implemented by step S901 to step S903.

In step S901, a first state parameter of the battery cell is acquired before and/or during charging of the battery cell.

Here, the first state parameter and the second state parameter are configured to characterize the real-time state of the battery cell. Illustratively, the first state parameter includes at least one of the following: a temperature of the battery cell, a state of charge of the battery cell, a charging duration of the battery cell, a voltage of the battery cell, and a current of the battery cell; the second state parameter includes at least one of the following: a state of charge of the battery cell, a charging duration of the battery cell, a voltage of the battery cell, and a current of the battery cell.

In step S902, a control instruction for a heating apparatus is generated based on the first state parameter.

In step S903, the control instruction is sent to the heating apparatus, where the control instruction is configured to control the heating apparatus to heat the battery cell.

In some embodiments, the step further includes: acquiring a second state parameter of the battery cell before and/or during charging of the battery cell, where a control instruction is configured to control the heating apparatus, so as to enable a temperature in a first time period during the charging of the battery cell to be within a preset temperature range, where the first time period is a time period during which the second state parameter of the battery cell meets a condition.

Here, a first time period and a second time period may be included during the charging of the battery cell. Illustratively, in the case that the lithium-containing transition metal phosphate includes a manganese element and an iron element, the second time period is a charging plateau corresponding to the iron element, and the first time period is a charging plateau corresponding to the manganese element. In the embodiments of the present application, the battery management system can increase, by controlling the heating apparatus, the delithiation depth of the lithium manganese iron phosphate when the battery cell reaches the charging plateau corresponding to the manganese element, thereby increasing the capacity of the lithium manganese iron phosphate battery.

In the embodiments of the present application, the battery management system in the battery pack can generate, based on a first state parameter configured to characterize the real-time state of the battery cell, a control instruction, and send the control instruction to a heating apparatus, and the heating apparatus can heat the battery cell in response to the control instruction, so as to enable a temperature in a first time period during charging of the battery cell to be within a preset temperature range, thereby reducing the polarization of the positive electrode active material itself, increasing the delithiation depth of the positive electrode active material of the battery, and thus increasing the capacity of the battery. Meanwhile, the temperature of the battery cell within the preset temperature range helps to increase the diffusion speed and the delithiation speed of lithium ions, thereby shortening the charging time of the battery cell, making it easier to meet the requirements of fast charging, and thus improving the charging experience of the user.

In some embodiments, as shown in FIG. 10, the charging method for the battery pack may also be implemented by step S1001.

In step S1001, a first time period during charging of the battery cell is identified based on a second state parameter of the battery cell.

It can be understood that during the charging of the battery cell, the second state parameter has an overall trend of gradually increasing, so a state parameter threshold of the battery cell when the battery cell enters the first time period during the charging can be predetermined. Then, by acquiring the second state parameter of the battery cell during the charging in real time and comparing the magnitude relationship between the second state parameter and the state parameter threshold, whether the battery cell enters the first time period during the charging can be determined.

In some embodiments, the second state parameter of the battery includes one of the following: a state of charge of the battery cell, a charging duration of the battery cell, a voltage of the battery cell, and a current of the battery cell; as shown in FIG. 10, the step S1001 described above may be implemented by step S10011 and step S10012.

In step S10011, in the case that the second state parameter of the battery cell is less than a first threshold, it is determined that the battery cell does not enter the first time period.

The first time period characterizes a charging plateau corresponding to a manganese element.

In step S10012, in the case that the second state parameter of the battery cell is greater than or equal to a first threshold, it is determined that the battery cell enters a first time period.

Here, the first threshold of the battery cell includes: a state parameter of the battery cell when the battery cell enters the first time period during the charging of the battery cell. The first threshold may include state parameter thresholds corresponding to the state of charge of the battery cell, the charging duration of the battery cell, the voltage of the battery cell, and the current of the battery cell.

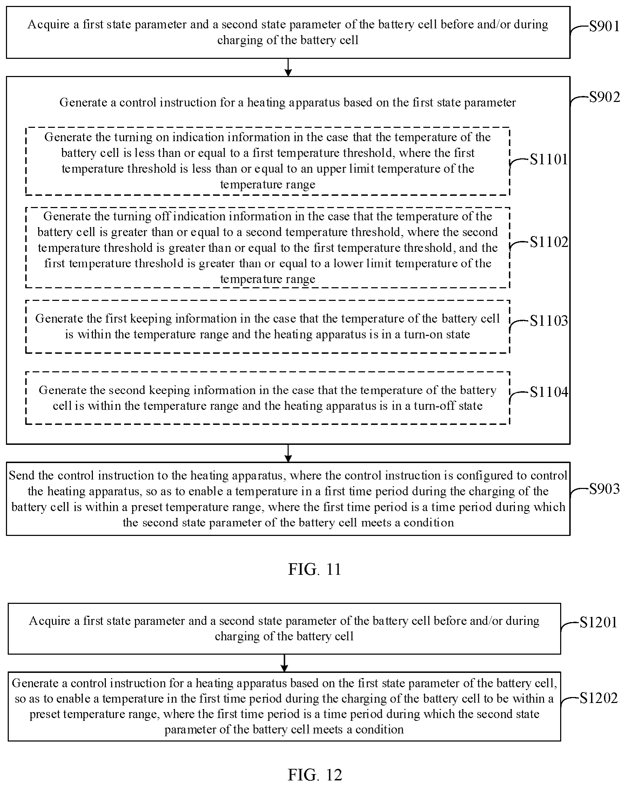

In some embodiments, the first state parameter of the battery cell includes a temperature of the battery cell; as shown in FIG. 11, the step S902 described above may also be implemented by step S1101 to step S1104.

In step S1101, the turning on indication information is generated in the case that the temperature of the battery cell is less than or equal to a first temperature threshold, where the first temperature threshold is less than or equal to an upper limit temperature of the temperature range.

In step S1102, the turning off indication information is generated in the case that the temperature of the battery cell is greater than or equal to a second temperature threshold, where the second temperature threshold is greater than or equal to a first temperature threshold, and the first temperature threshold is greater than or equal to a lower limit temperature of the temperature range.

In step S1103, the first keeping information is generated in the case that the temperature of the battery cell is within the temperature range and the heating apparatus is in a turn-on state.

In step S1104, the second keeping information is generated in the case that the temperature of the battery cell is within the temperature range and the heating apparatus is in a turn-off state.

In the embodiments of the present application, different control instructions can be obtained by comparing the temperature of the battery cell acquired in real time with the upper and lower limit temperatures of the temperature range, such that the heating apparatus performs an action that is consistent with the current temperature of the battery cell, thereby enabling the temperature of the battery cell to be within the temperature range when the battery cell enters the charging plateau corresponding to the manganese element.

In some embodiments, as shown in FIG. 12, the embodiments of the present application further provide a charging method for a battery pack. The battery pack includes at least one battery cell; the battery pack is located in a battery system; the battery system further includes a temperature sensor and a battery management system; the battery pack includes at least one battery cell, where: the temperature sensor is configured to detect the temperature of the battery cell; a positive electrode plate of the battery cell includes a positive electrode current collector and a positive electrode active material layer disposed on at least one side of the positive electrode current collector, and the positive electrode active material layer includes a positive electrode active material; the positive electrode active material includes lithium-containing transition metal phosphate, and the lithium-containing transition metal phosphate includes at least a manganese element; the heating mode is applied to a controller of a charging control device; the charging method for the battery pack may be implemented by step S1201 and step S1202:

In step S1201, a first state parameter and a second state parameter of the battery cell is acquired from the battery management system before and/or during charging of the battery cell.

In the embodiments of the present application, the battery management system of the battery pack may send the acquired first state parameter and second state parameter to the controller of the charging control device, such that the controller of the charging control device can obtain the first state parameter and the second state parameter before and/or during charging of the battery cell.

In step S1202, a control instruction for the heating apparatus is generated based on the first state parameter of the battery cell, so as to enable a temperature in a first time period during the charging of the battery cell to be within a preset temperature range, where the first time period is a time period during which the second state parameter of the battery cell meets a condition.

In the embodiments of the present application, after generating a control instruction, the controller of the charging control device may send the control instruction to a heating apparatus, thereby completing the control of the heating apparatus.

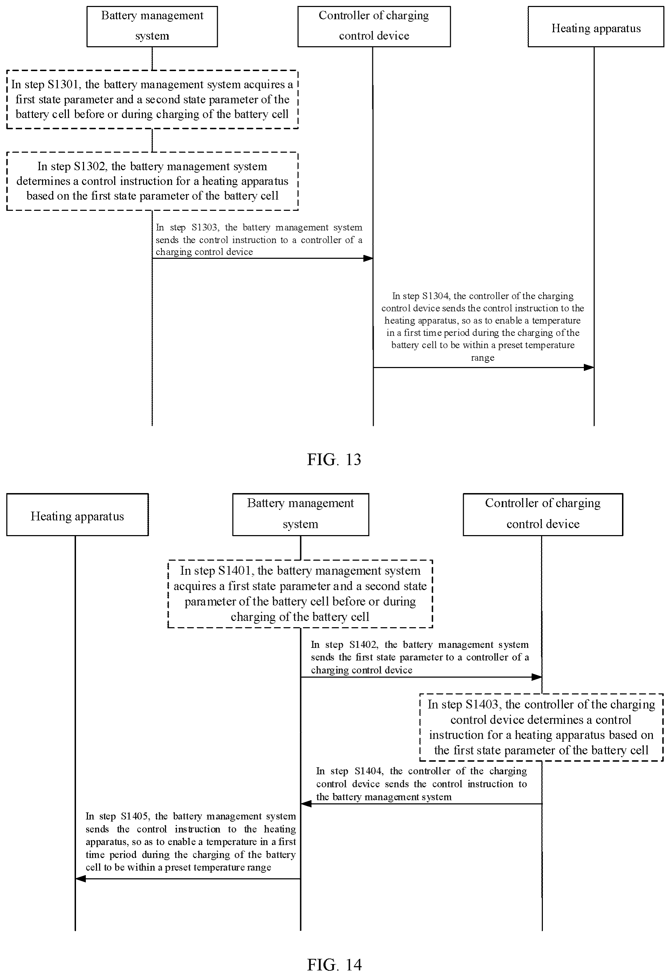

In some embodiments, as shown in FIG. 13, the embodiments of the present application further provide a charging method for a battery pack, which may be implemented by step S1301 to step S1304.

In step S1301, the battery management system acquires a first state parameter and a second state parameter of the battery cell before or during charging of the battery cell.

In step S1302, the battery management system determines a control instruction for a heating apparatus based on the first state parameter of the battery cell.

In step S1303, the battery management system sends the control instruction to a controller of a charging control device.

In step S1304, the controller of the charging control device sends the control instruction to the heating apparatus, so as to enable a temperature in a first time period during the charging of the battery cell to be within a preset temperature range.

The first time period is a time period during which the second state parameter of the battery cell meets a condition.

In some embodiments, as shown in FIG. 14, the embodiments of the present application further provide a charging method for a battery pack, which may be implemented by step S1401 to step S1405.

In step S1401, the battery management system acquires a first state parameter and a second state parameter of the battery cell before or during charging of the battery cell.

In step S1402, the battery management system sends the first state parameter to a controller of a charging control device.

In step S1403, the controller of the charging control device determines a control instruction for a heating apparatus based on the first state parameter of the battery cell.

In step S1404, the controller of the charging control device sends the control instruction to the battery management system.

In step S1405, the battery management system sends the control instruction to the heating apparatus, so as to enable a temperature in a first time period during the charging of the battery cell to be within a preset temperature range.

The first time period is a time period during which the second state parameter of the battery cell meets a condition.

It should be understood that reference throughout the specification to "one embodiment" or "an embodiment" means that particular features, structures, or characteristics related to the embodiment are included in at least one embodiment of the present application. Thus, "in one embodiment" or "in an embodiment" appearing in various places throughout the specification does not necessarily refer to the same embodiment. Furthermore, these particular features, structures or characteristics may be combined in any suitable manner in one or more embodiments. It should be understood that in various embodiments of the present application, the numerical order of the steps/processes described above does not imply the sequence of execution. The execution order of the steps/processes should be determined by their functions and internal logic, and should not impose any limitation on the implementation of the embodiments of the present application. The serial numbers of the embodiments of the present application are merely for description, and do not represent the superiority or inferiority of the embodiments.

It should be noted that the terms "comprise", "include", or any other variations thereof herein are intended to cover non-exclusive inclusion, such that a process, method, article, or apparatus that includes a list of elements includes not only those elements but may also include other elements not explicitly listed or inherent to such process, method, article, or apparatus. In the absence of further limitations, an element limited by the phrase "comprising a..." does not exclude the presence of additional identical elements in a process, method, article, or apparatus that includes the element.

The above descriptions are only embodiments of the present application, but the protection scope of the present application is not limited thereto. Any variations or substitutions that can be easily conceived by those skilled in the art within the technical scope disclosed in the present application shall be covered by the protection scope of the present application.

## Claims

1. A battery system, comprising:
a battery pack comprising at least one battery cell, a temperature sensor, a battery management system, and a heating apparatus, wherein
the battery cell comprises a positive electrode plate; the positive electrode plate comprises a positive electrode current collector and a positive electrode active material layer disposed on at least one side of the positive electrode current collector, and the positive electrode active material layer comprises a positive electrode active material;
the positive electrode active material comprises lithium-containing transition metal phosphate, and the lithium-containing transition metal phosphate comprises a manganese element;
the temperature sensor is configured to obtain a temperature of the battery cell;
the battery management system is configured to acquire a first state parameter of the battery cell before and/or during charging of the battery cell, wherein
the first state parameter of the battery cell is configured to generate a control instruction for a heating apparatus;
the control instruction is configured to control the heating apparatus to heat the battery cell.

2. The battery system according to claim 1, wherein the battery management system is further configured to: acquire a second state parameter of the battery cell before and/or during the charging of the battery cell;
determine the control instruction based on the first state parameter of the battery cell;
send the control instruction to the heating apparatus, so as to enable a temperature in a first time period during the charging of the battery cell to be within a temperature range, wherein the first time period is a time period during which the second state parameter of the battery cell meets a condition.

3. The battery system according to claim 1 or 2, wherein the control instruction comprises one or more of the following:
first keeping information configured to indicate to keep the heating apparatus turned on;
second keeping information configured to indicate to keep the heating apparatus turned off;
turning on indication information configured to indicate to turn on the heating apparatus;
turning off indication information configured to indicate to turn off the heating apparatus;
the control instruction comprises an operating parameter of the heating apparatus.

4. The battery system according to any one of claims 1 to 3, wherein the first time period is a time period during which the battery cell enters a charging plateau corresponding to the manganese element;
the battery management system is configured to acquire the first state parameter of the battery cell before the battery cell enters the first time period and during the first time period;
the control instruction is configured to control the heating apparatus, so as to enable the temperature of the battery cell in the first time period to be within the temperature range.

5. The battery system according to claim 4, wherein the lithium-containing transition metal phosphate further comprises an iron element.

6. The battery system according to claim 5, wherein the charging of the battery cell further comprises a second time period; the second time period is a time period during which the battery cell enters a charging plateau corresponding to the iron element;
the battery management system is configured to acquire the first state parameter of the battery cell during the first time period and the second time period;
the control instruction is configured to control the heating apparatus, so as to enable the temperature of the battery cell before entering the first time period and during the first time period to be within the temperature range.

7. The battery system according to any one of claims 1 to 6, wherein the first state parameter of the battery cell comprises one or more of the following: a temperature of the battery cell, a state of charge of the battery cell, a charging duration of the battery cell, a voltage of the battery cell, and a current of the battery cell.

8. The battery system according to claim 7, wherein the first state parameter of the battery cell comprises the temperature of the battery cell,
the battery management system is further configured to acquire, based on the temperature sensor, the temperature of the battery cell before or during the charging of the battery cell;
the turning on indication information is generated in the case that the temperature of the battery cell is less than or equal to a first temperature threshold, wherein the first temperature threshold is less than or equal to an upper limit temperature of the temperature range;
the turning off indication information is generated in the case that the temperature of the battery cell is greater than or equal to a second temperature threshold, wherein the second temperature threshold is greater than or equal to the first temperature threshold, and the first temperature threshold is greater than or equal to a lower limit temperature of the temperature range;
the first keeping information is generated in the case that the temperature of the battery cell is within the temperature range and the heating apparatus is in a turn-on state;
the second keeping information is generated in the case that the temperature of the battery cell is within the temperature range and the heating apparatus is in a turn-off state.

9. The battery system according to claim 7, wherein the first state parameter of the battery cell comprises one of the following: the state of charge of the battery cell, the charging duration of the battery cell, the voltage of the battery cell, and the current of the battery cell;
the battery management system is further configured to acquire the first state parameter of the battery cell during the charging of the battery cell, wherein
the turning on indication information is generated in the case that the first state parameter of the battery cell is less than or equal to a first threshold; the turning off indication information is generated in the case that the first state parameter of the battery cell is greater than or equal to a second threshold;
in the case that the turning on indication information and the turning off indication information are directed to the same heating apparatus, the first threshold is less than the second threshold; a value of the first threshold is related to at least one of the following factors: a heating rate of the heating apparatus, a temperature of the battery cell, and a state parameter value of the battery cell when the battery cell is in the first time period.

10. The battery system according to claim 9, wherein the first state parameter of the battery cell comprises the state of charge of the battery cell, and the battery management system is further configured to acquire the state of charge of the battery cell during the charging of the battery cell;
the turning on indication information is generated in the case that the SOC of the battery cell is less than or equal to a first SOC threshold; the turning off indication information is generated in the case that the SOC of the battery cell is greater than or equal to a second SOC threshold,
wherein the second SOC threshold is greater than the first SOC threshold;
the first SOC threshold is determined based on a molar proportion of the iron element and/or a molar proportion of the manganese element in the iron and manganese elements of the positive electrode active material.

11. The battery system according to claim 10, wherein the first SOC threshold is related to an SOC of the battery in a fully charged state and the molar proportion of the iron element or the manganese element.

12. The battery system according to claim 10 or 11, wherein the first state parameter of the battery cell further comprises the temperature of the battery cell;
the turning on indication information is generated in the case that the temperature of the battery cell is less than or equal to a first temperature threshold and the SOC of the battery cell is less than or equal to the first SOC threshold, wherein the first temperature threshold is less than or equal to an upper limit temperature of the temperature range;
the turning off indication information is generated in the case that the temperature of the battery cell is greater than or equal to a second temperature threshold and/or the SOC of the battery cell is greater than or equal to the second SOC threshold,
wherein the second temperature threshold is greater than or equal to the first temperature threshold, and the first temperature threshold is greater than or equal to a lower limit temperature of the temperature range.

13. The battery system according to any one of claims 1 to 12, wherein the temperature range comprises an optimal temperature, and the optimal temperature is between 40 °C and 45 °C.

14. The battery system according to any one of claims 1 to 13, wherein the temperature range comprises 30 °C to 60 °C.

15. The battery system according to any one of claims 1 to 14, wherein
the battery management system is configured to acquire the first state parameter of the battery cell before the charging; determine, based on the first state parameter of the battery cell, the control instruction for the heating apparatus, and send the control instruction to the heating apparatus;
the battery management system is further configured to control, in the case that the temperature of the battery cell is within the temperature range, the battery cell to enter the charging.

16. The battery system according to any one of claims 1 to 15, wherein the heating apparatus is electrically connected to the battery cell, the control instruction comprises the turning on indication information,
the heating apparatus is configured to provide, in response to the turning on indication information, a pulse current to the battery cell, so as to enable the battery cell to generate heat during passage of the pulse current through the battery cell.

17. The battery system according to claim 16, wherein the heating apparatus comprises a charging apparatus for charging the battery;
the charging apparatus is configured to charge, in response to the turning on indication information, the battery based on the pulse current.

18. The battery system according to claim 16 or 17, wherein the heating apparatus comprises a motor in an electrical device where the battery pack is located, and the motor comprises a winding and a control circuit connected between the winding and the battery;
the battery management system is further configured to send the control instruction to a controller in the electrical device;
the controller in the electrical device is configured to control, in response to the turning on indication information in the control instruction, the control circuit, so as to enable the motor to charge the battery cell based on the pulse current.

19. The battery system according to any one of claims 16 to 18, wherein the heating apparatus comprises a heating circuit, and the heating circuit comprises an energy storage element and a switch module;
the switch module is configured to form, in response to the turning on indication information in the control instruction, a loop for the energy storage element to charge the battery cell and a loop for the battery to discharge the energy storage element, so as to enable the energy storage element to charge the battery cell based on the pulse current.

20. The battery system according to any one of claims 1 to 19, wherein the heating apparatus is disposed on the exterior of a housing of the battery pack;
the heating apparatus is configured to generate, in response to the turning on indication information in the control instruction, heat, so as to perform heat transfer on the battery cell through the battery housing, thereby realizing heating of the battery cell.

21. The battery system according to claim 20, wherein the heating apparatus comprises a control circuit and a heating film, the heating film comprises a conductive layer and an insulating layer located between the conductive layer and the housing, wherein
the control circuit is configured to provide, in response to the turning on indication information, a pulse current to the conductive layer;
the conductive layer is configured to generate heat during the passage of the pulse current and transfer the heat to the battery cell;
the insulating layer is configured to electrically isolate the conductive layer from the battery.

22. The battery system according to claim 20, wherein the heating apparatus comprises a control unit, a heat-generating component, and a heat-conducting component, wherein a heat conducting medium is accommodated in the heat-conducting component;
the control unit is configured to provide, in response to the turning on indication information, a pulse current to the heat-generating component;
the heat-generating component is configured to generate heat during the passage of the current pulse, and the heat-conducting medium in the heat-conducting component is configured to transfer the heat generated by the heat-generating component to the battery cell.

23. The battery system according to claim 20, wherein the heating apparatus comprises a heat circulation pipe disposed around the battery cell, and the heat circulation pipe is connected to a heat pump;
the heat pump is configured to control, in response to the turning on indication information in the control instruction, circulating inflow and outflow of a heat-conducting liquid in the heat circulation pipeline, so as to heat the battery cell through the heat-conducting liquid.

24. The battery system according to any one of claims 1 to 23, wherein the battery management system is further configured to determine, based on the temperature of the battery cell, a target heating mode for heating the battery cell from at least two heating modes; or determine, based on a temperature rise rate of the battery cell and the temperature of the battery cell under different heating modes, a target heating mode for heating the battery cell from at least two heating modes;
the battery management system is further configured to send, based on the target heating mode, the control instruction to a corresponding heating apparatus,
wherein the at least two heating modes comprise a first heating mode for heating the battery cell based on a pulse current, and a second heating mode for heating the battery cell by means of heat transfer.

25. The battery system according to claim 24, wherein the battery management system is configured to:
determine a temperature difference between the temperature of the battery cell and the lower limit of the temperature range;
determine the target heating mode to be the first heating mode in the case that the temperature difference is greater than a third temperature threshold; determine the target heating mode to be the second heating mode in the case that the temperature difference is less than or equal to the third temperature threshold.

26. The battery system according to claim 25, wherein the battery management system is configured to:
determine a temperature difference between the temperature of the battery cell and the lower limit of the temperature range, and a duration for the battery cell to enter the first time period;
based on a magnitude relationship between the temperature difference and the third temperature threshold, and a magnitude relationship between the duration for the battery cell to enter the first time period and a second duration threshold, determine a target heating mode for heating the battery cell from at least two heating modes,
wherein in the case that the temperature difference is greater than the third temperature threshold, and the duration for the battery cell to enter the first time period is greater than the second duration threshold, the target heating mode is a corresponding heating mode with a high temperature rise rate between the first heating mode and the second heating mode;
in the case that the temperature difference is less than or equal to the third temperature threshold, and/or the duration for the battery cell to enter the first time period is less than or equal to the second duration threshold, the target heating mode is a corresponding heating mode with a low temperature rise rate between the first heating mode and the second heating mode.

27. The battery system according to any one of claims 1 to 26, wherein the battery management system is further configured to:
send a charging parameter to the charging apparatus, wherein the charging parameter comprises information of a constant current and a constant voltage, so as to enable the charging apparatus to charge the battery based on the constant current, and in the case that the battery cell is charged to a voltage greater than or equal to the voltage threshold based on the constant current, charge the battery based on the constant voltage until the battery reaches a fully charged state,
wherein the constant voltage is a voltage of the battery cell when the battery cell enters the first time period.

28. The battery pack according to claim 5, wherein
based on a total molar amount of the manganese element and the iron element in the lithium-containing transition metal phosphate, a molar proportion of the manganese element is greater than or equal to 10% and less than or equal to 90%; a molar proportion of the iron element is greater than or equal to 10% and less than or equal to 90%.

29. The battery system according to claim 5, wherein
based on a total molar amount of the manganese element and the iron element in the lithium-containing transition metal phosphate, a molar proportion of the manganese element is greater than or equal to 60% and less than or equal to 80%; a molar proportion of the iron element is greater than or equal to 20% and less than or equal to 40%.

30. The battery system according to claim 5, wherein
the lithium-containing transition metal phosphate comprises LixMny1Fey2Pz1Oa1Qb, wherein Q comprises at least one of Zn, Al, Na, K, Ti, V, Mg, Nb, Mo, W, B, S, Si, N, F, Cl, and Br; 0.8 ≤ x ≤ 1.2, 0.1 ≤ y1 ≤ 0.9, 0.1 ≤ y2 ≤ 0.9, 0.9 ≤ z1 ≤ 1, 3.5 ≤ a1 ≤ 4, and 0 ≤ b ≤ 0.2.

31. The battery system according to any one of claims 1 to 30, wherein
the positive electrode active material further comprises a ternary material and/or a lithium iron phosphate material.

32. The battery system according to claim 5, wherein
based on a total mass of the positive electrode active material, a mass proportion of the lithium-containing transition metal phosphate is greater than or equal to 25%.

33. The battery pack according to claim 5, wherein
based on a total mass of the positive electrode active material, a mass proportion of the lithium-containing transition metal phosphate is greater than or equal to 65%.

34. A charging control device, wherein the charging control device is configured to control a heating apparatus to heat a battery cell; a battery system comprises a battery pack, a temperature sensor, a battery management system, and the heating apparatus; the battery pack comprises at least one battery cell, wherein the temperature sensor is configured obtain a temperature of the battery cell;
a positive electrode plate of the battery cell comprises a positive electrode current collector and a positive electrode active material layer disposed on at least one side of the positive electrode current collector, and the positive electrode active material layer comprises a positive electrode active material; the positive electrode active material comprises lithium-containing transition metal phosphate, and the lithium-containing transition metal phosphate comprises a manganese element;
the charging control device comprises:
a controller, configured to acquire a first state parameter of the battery cell from the battery management system before and/or during charging of the battery cell; generate, based on the first state parameter of the battery cell, a control instruction for a heating apparatus, wherein the control instruction is configured to control the heating apparatus to heat the battery cell.

35. The charging control device according to claim 34, wherein the charging control device comprises a charging apparatus, and the charging apparatus further comprises:
a charging module, configured to charge at least one battery cell in the battery pack.

36. The charging control device according to claim 34 or 35, wherein the controller is configured to determine whether the charging apparatus is reserved or occupied;
in the case that it is determined that the charging apparatus is reserved or occupied, a charging rejection instruction is generated; in the case that the control module determines that the charging apparatus is not reserved or occupied, a charging permission instruction is generated, and the charging permission instruction is configured to indicate that the charging apparatus is not reserved or occupied; send the charging rejection instruction or the charging permission instruction to the battery management system;
the controller is further configured to receive a charging reservation instruction sent by a battery management system based on the charging permission instruction, wherein the charging reservation instruction is configured to request a reservation for the charging apparatus; send, in response to the charging reservation instruction, a charging instruction to the battery management system.

37. A charging method for a battery pack, wherein the charging method is applied to a battery management system; a battery system comprises: a battery pack, a temperature sensor, a heating apparatus, and the battery management system; the battery pack comprises at least one battery cell, wherein the temperature sensor is configured to obtain a temperature of the battery cell;
a positive electrode plate of the battery cell comprises a positive electrode current collector and a positive electrode active material layer disposed on at least one side of the positive electrode current collector, and the positive electrode active material layer comprises a positive electrode active material; the positive electrode active material comprises lithium-containing transition metal phosphate, and the lithium-containing transition metal phosphate comprises at least a manganese element; the method comprises:
acquiring a first state parameter of the battery cell before and/or during charging of the battery cell;
generating a control instruction for the heating apparatus based on the first state parameter;
sending the control instruction to the heating apparatus, wherein the control instruction is configured to control the heating apparatus to heat the battery cell.

38. The method according to claim 37, wherein the control instruction comprises one or more of the following:
first keeping information configured to indicate to keep the heating apparatus turned on;
second keeping information configured to indicate to keep the heating apparatus turned off;
turning on indication information configured to indicate to turn on the heating apparatus;
turning off indication information configured to indicate to turn off the heating apparatus;
the control instruction comprises an operating parameter of the heating apparatus;
the method further comprises:
acquiring a second state parameter of the battery cell before and/or during the charging of the battery cell;
the control instruction is configured to control the heating apparatus, so as to enable a temperature of the battery cell during a first time period of the charging to be within a temperature range, wherein the first time period is a time period during which the second state parameter of the battery cell meets a condition.

39. The method according to claim 38, wherein the second state parameter of the battery comprises one of the following: a state of charge of the battery cell, a charging duration of the battery cell, a voltage of the battery cell, and a current of the battery cell;
the method further comprises:
determining that the battery cell does not enter the first time period in the case that the second state parameter of the battery cell is less than a first threshold;
determining that the battery cell enters the first time period in the case that the second state parameter of the battery cell is greater than or equal to a first threshold;
the first threshold of the battery cell comprises a state parameter of the battery cell when the battery cell enters the first time period during the charging of the battery cell.

40. The method according to any one of claims 37 to 39, wherein the first state parameter of the battery cell comprises one or more of the following: a temperature of the battery cell, a state of charge of the battery cell, a charging duration of the battery cell, a voltage of the battery cell, and a current of the battery cell.

41. The method according to claim 40, wherein the first state parameter of the battery cell comprises the temperature of the battery cell; said generating a control instruction for the heating apparatus based on the first state parameter, comprises:
generating the turning on indication information in the case that the temperature of the battery cell is less than or equal to a first temperature threshold, wherein the first temperature threshold is less than or equal to an upper limit temperature of the temperature range;
generating the turning off indication information in the case that the temperature of the battery cell is greater than or equal to a second temperature threshold, wherein the second temperature threshold is greater than or equal to the first temperature threshold, and the first temperature threshold is greater than or equal to a lower limit temperature of the temperature range;
generating the first keeping information in the case that the temperature of the battery cell is within the temperature range and the heating apparatus is in a turn-on state;
generating the second keeping information in the case that the temperature of the battery cell is within the temperature range and the heating apparatus is in a turn-off state.

42. A charging method for a battery pack, wherein the battery pack comprises at least one battery cell; the battery pack is located in a battery system; the battery system further comprises a temperature sensor and a battery management system, wherein the temperature sensor is configured to obtain a temperature of the battery cell; a positive electrode plate of the battery cell comprises a positive electrode current collector and a positive electrode active material layer disposed on at least one side of the positive electrode current collector, and the positive electrode active material layer comprises a positive electrode active material; the positive electrode active material comprises lithium-containing transition metal phosphate, and the lithium-containing transition metal phosphate comprises at least a manganese element; the charging method for the battery pack is applied to a charging control device; the method comprises:
acquiring a first state parameter of the battery cell from the battery management system before and/or during charging of the battery cell;
generating a control instruction for the heating apparatus based on the first state parameter of the battery cell, wherein the control instruction is configured to control the heating apparatus to heat the battery cell.
